(19) **Europäisches Patentamt / European Patent Office / Office européen des brevets**

(11) **EP 2 246 379 B1**

(12) **EUROPEAN PATENT SPECIFICATION**

(45) Date of publication and mention of the grant of the patent:
**07.05.2014 Bulletin 2014/19**

(51) Int Cl.:
*C08G 18/66* (2006.01)  *C08G 18/08* (2006.01)
*C08G 18/32* (2006.01)  *C08G 18/10* (2006.01)
*C08G 18/48* (2006.01)  *D01F 6/70* (2006.01)

(21) Application number: **10169039.4**

(22) Date of filing: **11.07.2007**

(54) **Process for producing polyurethane and use of polyurethane obtained by the same**

Verfahren zur Herstellung von Polyurethan und Verwendung von danach hergestelltem Polyurethan

Procédé de fabrication d'un polyuréthane et utilisation du polyuréthane ainsi produit

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **12.07.2006 JP 2006192075**
**10.08.2006 JP 2006218843**
**10.08.2006 JP 2006218844**
**30.03.2007 JP 2007092699**
**30.03.2007 JP 2007092700**

(43) Date of publication of application:
**03.11.2010 Bulletin 2010/44**

(62) Document number(s) of the earlier application(s) in accordance with Art. 76 EPC:
**07790646.9 / 2 042 535**

(73) Proprietor: **Mitsubishi Chemical Corporation**
**Chiyoda-ku**
**Tokyo 100-8251 (JP)**

(72) Inventors:
• **Kobayashi, Mitsuhara**
**Yokohama-shi**
**Kanagawa 227-8502 (JP)**
• **Fukuuchi, Youko**
**Yokkaicha-shi**
**Mie 510-8530 (JP)**
• **Taniguchi, Takanori**
**Yokohama-shi**
**Kanagawa 227-8502 (JP)**

(74) Representative: **Vossius & Partner**
**Siebertstrasse 4**
**81675 München (DE)**

(56) References cited:
**WO-A1-2006/075144    US-A- 5 723 563**
**US-A1- 2004 030 060    US-A1- 2004 225 101**

**Description**

TECHNICAL FIELD

The present invention relates to a process for producing a polyurethane and use of the polyurethane obtained by the production process.

BACKGROUND ART

Polyurethanes and polyurethane-ureas are in use in various fields. However, since these polymers are used in various applications, they are desired to be improved especially in the function of being elastic, etc. Specifically, the desired properties concerning the function of being elastic at room temperature include high elongation at break, small stress fluctuations with deformation/strain, and a small hysteresis loss in expansion/contraction. Furthermore, an improvement in elastic recovery at low temperatures is desired.

For the purpose of attaining those improvements in the function of being elastic, technical improvements are being made in which the crystallizability of soft segments in a polyurethane and polyurethane-urea is reduced by using various diols which are less apt to crystallize. However, those properties concerning the function of being elastic have not been fully satisfied so far.

Examples of the technical improvements include a poly(1,2-propylene ether) glycol. This poly(1,2-propylene ether) glycol is a low-cost polyether glycol which is less apt to crystallize, because the repeating units thereof each have a methyl group therein. However, polyurethane elastomers obtained from the poly(1,2-propylene ether) glycol have a drawback that they are low in strength and elongation, and are usable in limited applications. Furthermore, there also is a problem that since the hydroxyl groups of the poly(1,2-propylene ether) glycol are secondary, this glycol shows low reactivity in polyurethane production. In addition, it has been pointed out that the poly(1,2-propylene ether) glycol has an exceedingly narrow molecular weight distribution and the too narrow molecular weight distribution exerts adverse influences on performances of the polyurethane and polyurethane-urea elastomers (non-patent document 1).

It has been attempted to produce a polyurethane or polyurethane-urea from a poly(trimethylene ether) glycol in order to overcome those problems.

For example, polyurethane and polyurethane-urea elastomer compositions produced from a polyoxetane polymer have been reported. However, the polyoxetane compositions produced by this process merely provide academic subjects because the monomer is unstable and costly and is not commercially available in a large quantity. From an industrial standpoint, problems remain unsolved (non-patent document 2).

A report has recently been made on polyurethane and polyurethane-urea elastomer moldings obtained, through polymerization by a process using no solvent, from a poly(trimethylene ether) glycol produced by the dehydration condensation reaction of 1,3-propanediol (patent document 1).

Non-Patent Document 1: S.D. Seneker, "New Ultra-Low Monol Polyols with Unique High-Performance Characteristics", Polyurethane Expo'96, 305-313
Non-Patent Document 2: Conjeevaram, et al., J. Polymer Science, Polymer Chemistry Edition, 28, 429-444(1985)
Patent Document 1: JP-T-2005-535744 (The term "JP-T" as used herein means a published Japanese translation of a PCT patent application.)

DISCLOSURE OF THE INVENTION

PROBLEMS THAT THE INVENTION IS TO SOLVE

Investigations made by the present inventors revealed that use of the polyether polyol obtained from oxetane as described in non-patent document 2 has problems including the following. This polyol is not industrially available. Although dimethyl sulfoxide is used as a solvent, the solubility of polyurethane-ureas therein is insufficient and, hence, molecular weight cannot be heightened to such a level as to bring about sufficient elastomer performances. Since the solvent has a high boiling point, it is difficult to remove the solvent. Furthermore, the technique cannot be applied to the polyether polyol obtained by the dehydration condensation reaction of 1,3-propanediol.

On the other hand, the production process using no solvent as disclosed in patent document 1 was found to have problems including the following. Even when this process is used to conduct a reaction for polyurethane and polyurethane-urea formation, the reaction cannot be controlled depending on the kinds of the isocyanate and amine. As a result, a homogeneous polyurethane and a homogeneous polyurethane-urea are not obtained. Consequently, the elastomer obtained is difficult to be formed into fibers or films. Specifically, close investigations on details of this technique revealed the following. The technique is suitable for polyurethane production using a polyisocyanate having relatively low reactivity or a combination with a polyamine or polyol having relatively low reactivity. However, when the glycol is used in combination with a highly reactive aromatic isocyanate or aliphatic amine, the polymerization reaction for polyurethane formation cannot proceed evenly and a polyurethane having sufficient properties is not obtained. Consequently, it is difficult to apply the technique to the production of a fiber, film, artificial leather, high-performance elastomer, or the like.

Accordingly, an object of the invention is to provide a polyurethane and a polyurethane-urea which are extremely useful in high-performance polyurethane elastomer applications such as elastic polyurethane fibers, synthetic/artificial leathers, and TPUs (thermoplastic polyurethane elastomers).

MEANS FOR SOLVING THE PROBLEMS

The present inventors diligently made investigations in order to overcome the problems described above. As a result, they have found that when a polyether polyol obtained by the dehydration condensation reaction of a polyol and containing a 1,3-propanediol unit is reacted with a polyisocyanate and a chain extender in the co-presence of an aprotic polar solvent, then a polyurethane having excellent elastic properties is obtained which has high elongation at break, small stress fluctuations with deformation in stretching, small hysteresis loss in stress during expansion/contraction, small residual strain after expansion/contraction under low-temperature and high-temperature conditions, excellent moisture permeability, and excellent dyeability. The invention has been thus completed.

Essential points of the invention are as follows.

(1) A process for producing a polyurethane from

(a) a polyether polyol which is obtained by a dehydration condensation reaction of a polyol and contains a 1,3-propanediol unit,
(b) a polyisocyanate compound, and
(c) a chain extender, which is an aliphatic amine

wherein the polyurethane is produced in the co-presence of an aprotic polar solvent.

(2) The process for producing a polyurethane according to (1) above wherein the polyether polyol (a) contains the 1,3-propanediol unit in an amount of 50% by mole or larger.

(3) The process for producing a polyurethane according to (1) or (2) above wherein the polyether polyol (a) has a number-average molecular weight of 2,500-4,500.

(4) The process for producing a polyurethane according to any one of (1) to (3) above wherein the polyether polyol (a) has a ratio of the weight-average molecular weight to the number-average molecular weight (Mw/Mn) of 1.5 or higher.

(5) The process for producing a polyurethane according to any one of (1) to (4) above wherein the polyisocyanate compound (b) is an aromatic polyisocyanate.

(6) The process for producing a polyurethane according to any one of (1) to (5) above wherein the aprotic polar solvent is an amide solvent.

(7) A polyurethane produced by the process for polyurethane production according to any one of (1) to (6) above.

(8) A film comprising the polyurethane according to (7) above.

(9) A fiber comprising the polyurethane according to (7) above.

(10) A urethane prepolymer solution comprising: an isocyanate-terminated prepolymer produced from

(a) a polyether polyol which is obtained by a dehydration condensation reaction of a polyol and contains a 1,3-propanediol unit and
(b) a polyisocyanate compound; and

an aprotic polar solvent.

(11) The urethane prepolymer solution according to (10) above wherein the polyether polyol (a) contains the 1,3-propanediol unit in an amount of 50% by mole or larger.

ADVANTAGES OF THE INVENTION

According to the production process of the invention, a polyurethane and a polyurethane-urea are produced which are excellent in the function of being elastic, i.e., have high elongation at break, small stress fluctuations with strain in stretching, small hysteresis loss in stress during expansion/contraction, and small residual strain after expansion/contraction under low-temperature conditions, and which are excellent also in moisture permeability, dyeability, and mechanical properties. Because of this, a polyurethane and a polyurethane-urea which are extremely useful in high-performance polyurethane elastomer applications, such as elastic polyurethane and polyurethane-urea fibers, synthetic/artificial leathers, and TPUs, are provided. Furthermore, a prepolymer as an intermediate has a high rate of dissolution in polar solvents and highly contributes to an increase in the productivity of the polyurethane and polyurethane-urea.

BEST MODE FOR CARRYING OUT THE INVENTION

The invention will be explained below in detail.

<Polyurethane>

The term polyurethane in the invention means a polyurethane or a polyurethane-urea unless otherwise indicated. It has been known that these two resins have almost the same properties. On the other hand, a difference in structural feature resides in that a polyurethane is a polymer produced using a short-chain polyol as a chain extender, while a polyurethane-urea is a polymer produced using a polyamine compound as a chain extender.

The polyurethane in the invention is one which includes (a) a polyether polyol obtained by the dehydration condensation reaction of a polyol and containing a 1,3-propanediol unit, (b) a polyisocyanate compound, and (c) a chain extender.

The proportions of the ingredients in the polyurethane may be usually as follows. When the number of moles of the hydroxyl groups of the polyether polyol (a) obtained by the dehydration condensation reaction of a polyol and containing a 1,3-propanediol unit is expressed by A, the number of moles of the isocyanate groups of the polyisocyanate compound (b) is expressed by B, and the number of moles of the active-hydrogen-substituted groups (hydroxyl groups and amino groups) of the chain extender (c) is expressed by C, then A:B is generally in the range of from 1:10 to 1:1, preferably from 1:5 to 1:1.05, more preferably from 1:3 to 1:1.1, even more preferably from 1:2.5 to 1:1.2, especially preferably from 1:2 to 1:1.2. In addition, (B-A):C is in the range of generally from 1:0.1 to 1:5, preferably from 1:0.8 to 1:2, more preferably from 1:0.9 to 1:1.5, even more preferably from 1:0.95 to 1:1.2, especially preferably from 1:0.98 to 1:1.

<(a) Polyether Polyol>

The polyether polyol to be used in the invention means a polyether polyol containing an oxytrimethylene unit derived from 1,3-propanediol (1,3-propanediol unit). Specifically, the oxytrimethylene unit is represented by the following chemical formula (1).

$$-(CH_2CH_2CH_2O)- \qquad (1)$$

In the invention, other polyol units are likewise expressed unless otherwise indicated.
With respect to the polyol units constituting the polyether polyol to be used in the invention, it is preferred that the proportion of 1,3-propanediol units to all polyol units should be 50% by mole or higher. The proportion thereof is more preferably 60% by mole or higher, even more preferably 70% by mole or higher, especially preferably 80% by mole or higher, most preferably 100% by mole. In case where the proportion of 1,3-propanediol units is lower than 50% by mole, there is a tendency that this polyol has too high a viscosity and poor suitability for operation or that the polyurethane to be obtained is less apt to have sufficient strength or elongation.

Other polyol units are not particularly limited. Examples thereof include 2-methyl-1,3-propanediol units, 2,2-dimethyl-1,3-propanediol units, 3-methyl-1,5-pentanediol units, 1,2-ethylene glycol units, 1,6-hexanediol units, 1,7-heptanediol units, 1,8-octanediol units, 1,9-nonanediol units, 1,10-decanediol units, and 1,4-cyclohexanedimethanol units.

It is preferred that the polyether polyol should be a copolymer poly(trimethylene ether) glycol in which 3-20% by mole of the polyol units constituting the polyether polyol are derived from 2-methyl-1,3-propanediol, 2,2-diemethyl-1,3-propanediol, or 3-methyl-1,5-pentanediol. Most preferred is a poly(trimethylene ether) glycol which is wholly constituted of 1,3-propanediol units.

The polyol to be used as a raw material for the polyether polyol preferably is one or more of diols having two primary hydroxyl groups, such as 1,3-propanediol, 2-methyl-1,3-propanediol, 2,2-dimethyl-1,3-propanediol, 3-methyl-1,5-pentanediol, ethylene glycol, 1,6-hexanediol, 1,7-heptanediol, 1,8-octanediol, 1,9-nonanediol, 1,10-decanediol, and 1,4-cyclohexanedimethanol.

Although these polyols are usually used alone, a mixture of two or more polyols may be used according to need. It is especially preferred to use 1,3-propanediol alone.

With respect to the amount of 1,3-propanediol to be fed in the invention, the lower limit thereof is preferably 50% by mole or larger, more preferably 60% by mole or larger, especially preferably 70% by mole or larger, based on all polyol(s). The upper limit thereof is generally 100% by mole or smaller. When the content thereof is too low, there are cases where the urethane to be obtained does not have desired properties or production of the polyether polyol takes much time or results in an impaired yield.

Those diols may be used in combination with an oligomer constituted of 2-9 polymerized molecules of the main diol and obtained by dehydration condensation reaction. Furthermore, those diols may be used in combination with a polyol having three or more hydroxyl groups, such as trimethylolethane, trimethylolpropane, or pentaerythritol, or with an oligomer of any of these polyols. In these cases, however, it is preferred that 1,3-propanediol accounts for at least 50% by mole. Usually, one or more diols having two primary hydroxyl groups and 3-10 carbon atoms, other than those which form a five-membered-ring or six-membered-ring cyclic ether through dehydration condensation reaction, such as 1,4-butanediol or 1,5-pentanediol, are subjected to the reaction, or a mixture which is composed of such one or more diols and other polyol(s) and in which the proportion of the other polyol(s) is lower than 50% by mole is subjected to the reaction. Preferably, one or more diols selected from the group consisting of 1,3-propanediol, 2-methyl-1,3-propanediol, 2,2-dimethyl-1,3-propanediol, and 3-methyl-1,5-pentanediol or a mixture which is composed of 1,3-propanediol and other diol(s) and in which the proportion of the other diol(s) is lower than 50% by mole is subjected to the reaction. More preferably, the polyether polyol is one obtained by copolymerizing 1,3-propanediol with 3-20% by mole 2-methyl-1,3-propanediol, 2,2-dimethyl-1,3-propanediol, or 3-methyl-1,5-pentanediol.

The polyether polyol obtained by the dehydration condensation reaction of a polyol 1 and containing a 1,3-propanediol unit may be used as a blend with a known polyether polyol, polyester polyol, or polycarbonate polyol unless this especially lessens the effects of the invention. Although the polyether polyol to be optionally used in the blend is not particularly limited, examples thereof include poly(tetramethylene ether) glycol (PTMG), polyether polyols which are copolymers of 3-methyltetrahydrofuran and tetrahydrofuran (e.g., "PTG-L1000", "PTG-L2000", and "PTG-L3500", all manufactured by Hodogaya Chemical Co., Ltd.), and polyether glycols which are copolymers of neopentyl glycol and tetrahydrofuran. In the case where a known polyether polyol containing no 1,3-propanediol unit, such as those shown above, is blended, this polyether polyol containing no 1,3-propanediol unit need not be one produced by dehydration condensation reaction and may be one produced by a known technique.

The amount of such known polyol to be blended is not particularly limited. It is, however, preferred that the weight ratio of the polyether polyol obtained by the dehydration condensation reaction of a polyol and containing at least 50% by mole 1,3-propanediol units to the known polyol should be from 99:1 to 1:99, preferably from 95:5 to 5:95, more preferably from 90:10 to 10:90, even more preferably from 80:20 to 20:80, especially preferably from 50:50 to 100:0.

The polyether polyol obtained by the dehydration condensation reaction of a polyol and containing a 1,3-propanediol unit may be used after having been converted to an ABA type polyol by capping the terminal hydroxyl groups with caprolactone. It is also possible to cap the ends by reaction with an oxirane such as ethylene oxide or propylene oxide before the polyether polyol is used.


<Process for Producing Polyether Polyol>

It is essential that the polyether polyol to be used as a raw material in the invention should be one produced by the dehydration condensation reaction of a polyol and containing a 1,3-propanediol unit.

The production of the polyether polyol for use in the invention by the dehydration condensation reaction of a polyol can be conducted either batchwise or continuously. In the case of a batch process, for examples, a method may be used in which a polyol as a raw material and an acid as a catalyst are introduced into a reaction vessel and the polyol is reacted with stirring. An alkali metal, a base, or a compound of a metal selected from the group consisting of Group 4 and Group 13 may be caused to coexist with the acid catalyst. In the case of the continuous reaction, use may be made of a method in which a polyol as a raw material and a catalyst are continuously fed through one end of a reactor including many stirring vessels arranged serially or of a flow-through type reactor and moved through the reactor in a piston flow or similar state and a liquid reaction mixture is continuously discharged through another end.

With respect to the temperature for the dehydration condensation reaction, the lower limit thereof is generally 120°C and the upper limit thereof is generally 250°C. Preferably, the lower limit and upper limit thereof are 140°C and 200°C, respectively. More preferably, the lower limit and upper limit thereof are 150°C and 190°C, respectively. In case where the temperature is too high, coloration tends to be enhanced disadvantageously. In case where the temperature is too low, reaction rate tends not to increase.

It is preferred that the reaction should be conducted in an inert gas atmosphere such as nitrogen or argon. Any desired reaction pressure may be used so long as the reaction system is kept liquid. Usually, the reaction is conducted at ordinary pressure. According to need, the reaction may be performed at a reduced pressure or while passing an inert gas through the reaction system in order to accelerate the removal from the reaction system of the water generated by the reaction. Water vapor or an organic solvent may be used in place of the inert gas.

Reaction time varies depending on the amount of the catalyst used, reaction temperature, desired yield and properties of the product of the dehydrating condensation, etc. However, the lower limit thereof is generally 0.5 hours and the upper limit thereof is generally 50 hours. Preferably, the lower limit thereof is 1 hour and the upper limit thereof is 20 hours.

Although the reaction is usually conducted without using any solvent, a solvent may be used if desired. The solvent to be used may be suitably selected from common organic solvents for organic synthesis reactions while taking account of vapor pressure under the reaction conditions, safety, solubility of the raw materials and product, etc.

The polyether polyol yielded can be separated/recovered from the reaction system in an ordinary manner. In the case where an acid functioning as a heterogeneous-system catalyst has been used, the liquid reaction mixture is first subjected to filtration or centrifugal separation to thereby remove the acid suspending in the mixture. Subsequently, the liquid mixture is subjected to distillation or extraction with, e.g., water to remove low-boiling oligomers and a low-boiling organic base and thereby obtain the target polyether polyol. In the case where an acid functioning as a homogeneous-system catalyst has been used, water is first added to the liquid reaction mixture and the resultant mixture is separated into a polyether polyol phase and an aqueous phase containing the acid, an organic base, oligomers, etc. Incidentally, since part of the polyether polyol is in the form of an ester with the acid used as a catalyst, the liquid reaction mixture to which water has been added is heated to hydrolyze the ester and then separated into phases. In this operation, the hydrolysis can be accelerated by using the water together with an organic solvent having an affinity for both the polyether polyol and water. In the case where the polyether polyol has a high viscosity and impairs the efficiency of the phase separation operation, it is preferred to use an organic solvent which has an affinity for the polyether polyol and can be easily separated from the polyether polyol by distillation. The polyether polyol phase obtained by the phase separation is distilled to remove the water and organic solvent remaining therein and thereby obtain the target polyether polyol. In the case where the acid partly remains in the polyether polyol phase obtained by the phase separation, this phase is washed with water or an aqueous alkali solution or treated with a solid base such as calcium hydroxide to thereby remove the residual acid, before being subjected to distillation.

The polyether polyol obtained is stored usually in an inert gas atmosphere such as nitrogen or argon. According to need, unsaturated ends may be diminished. For example, use may be made of a method in which the poly(trimethylene ether) glycol and copolymer thereof are treated in the presence of a metal catalyst selected from the group consisting of Group 4 to Group 12 of the periodic table to thereby convert unsaturated ends to hydroxyl groups.

Examples of the metal catalyst selected from the group consisting of Group 4 to Group 12 of the periodic table include titanium, zirconium, hafnium, vanadium, niobium, tantalum, chromium, molybdenum, tungsten, manganese, rhenium, iron, ruthenium, osmium, cobalt, rhodium, iridium, nickel, palladium, platinum, copper, silver, gold, zinc, cadmium, and mercury. A preferred metal catalyst is a metal catalyst selected from the group consisting of Groups 6 to 11, and examples thereof include chromium, molybdenum, tungsten, manganese, rhenium, iron, ruthenium, osmium, cobalt, rhodium, iridium, nickel, palladium, platinum, copper, silver, and gold. A more preferred metal catalyst is a metal catalyst selected from the group consisting of Groups 8 to 10, and examples thereof include iron, ruthenium, osmium, cobalt, rhodium, iridium, nickel, palladium, and platinum. An especially preferred metal catalyst is rhodium, palladium, ruthenium, or platinum. Palladium is optimal from the standpoints of availability and cost.

The metal catalyst to be used can be in the form of an alloy, salt, or coordination compound with one or more other metals. The metal catalyst may also be fixed to a support. Examples of the support include activated carbon, alumina, silica, zeolites, clay, and activated clay. The electronic state of the metal is not limited so long as the metal, during the reaction, is present in the 0-valence state in the reaction system. Consequently, a metal which, when added to the reaction system, is in, e.g., the II-valence state may be selected as a catalyst. When a metal catalyst is fixed to a support, the amount of the catalyst to be fixed is not particularly limited. However, the amount thereof is generally from 0.1% to less than 50%, preferably 0.5%-20%, more preferably 1%-10%.

In the case where the metal catalyst is, for example, palladium, examples of the form of the metal catalyst include metallic palladium in a fine powder form and supported metallic-palladium catalysts, e.g., palladium on carbon, alumina-supported palladium, and silica-supported palladium. Other examples thereof include tetrakis(triphenylphosphine)palladium(0), palladium(II) acetate, palladium(II) chloride, palladium(II) bis(triphenylphosphine) chloride, bis(pentanedionato)palladium(II), and palladium(II) bis(benzonitrile). Catalysts may be separately added and thereby caused to form a complex or salt.

The catalyst is used in an amount sufficient to heighten the rate of diminution of unsaturated terminal groups to such a degree that the rate can be determined. It is preferred to use the catalyst in such a concentration that the reaction proceeds to a desired proportion in an industrially practicable time period, e.g., 24 hours or shorter, preferably 10 hours or shorter, more preferably 5 hours or shorter. In the case where the metal catalyst to be used is one fixed to a support or is a fine metal catalyst powder, the amount of this metal catalyst to be used may be suitably selected according to the kind thereof. For example, in the case of a catalyst obtained by fixing 5% by weight palladium to a support, the amount of the metal catalyst (excluding the support) is generally 0.0001-10% by weight, preferably 0.001-1% by weight, more preferably 0.005-0.25% by weight, based on the weight of the poly(trimethylene ether) glycol and copolymer thereof on a dry basis.

On the other hand, when the metal catalyst to be used is in the form of a complex catalyst or metal salt, such as, e.g., tetrakis(triphenylphosphine)palladium(0), palladium(II) acetate, palladium(II) chloride, palladium(II) bis(triphenylphosphine) chloride, bis(pentanedionat-o)palladium(II), or palladium(II) bis(benzonitrile), then the amount of this catalyst to be used may be suitably selected according to the kind thereof. However, the amount thereof is generally 0.001-10% by weight, preferably 0.001-5% by weight, more preferably 0.005-1% by weight, based on the weight of the poly(trimethylene ether) glycol and copolymer thereof.

In this method, the diminution of unsaturated terminal groups in the poly(alkylene ether) glycol by a treatment conducted in the presence of a metal catalyst (unsaturated-bond elimination treatment) is presumed to proceed by the following mechanism. The double bond in an allyl terminal moves inward to form a 1-propenyl terminal group, and this group reacts with water to release propionaldehyde and simultaneously form a hydroxyl terminal group. As the water necessary for the unsaturated-bond elimination treatment, use can be made of the water contained in the metal catalyst. For example, commercial products of activated carbon having palladium supported thereon generally contain about 50% water. It is, however, preferred that water should be present in the reaction system in an amount not smaller than the amount necessary to hydrolyze 1-propenyl terminal groups (for example, in an amount in excess by about 0.5% by weight, preferably 1% by weight, more preferably 10% by weight, based on the poly(alkylene ether) glycol). The amount of water in a practical treatment is generally 1-50 parts by weight, preferably 5-30 parts by weight, more preferably 10-20 parts by weight, per 100 parts by weight of the poly(alkylene ether) glycol.

The upper limit of the temperature for the unsaturated-bond elimination treatment is selected in the range of temperatures lower than the decomposition temperature (T) of the poly(alkylene ether) glycol. The upper limit thereof is generally T-20°C, preferably T-120°C, more preferably T-200°C. The lower limit of the temperature for the unsaturated-bond elimination treatment is generally 25°C, preferably 50°C. In the case of using a high reaction temperature, the unsaturated-bond elimination treatment may be conducted at an elevated pressure.

The unsaturated-bond elimination treatment may be conducted in the presence of a solvent. Examples of the solvent include methanol, ethanol, propanol, butanol, water, tetrahydrofuran, toluene, and acetone. The amount of the solvent is not particularly limited. However, the upper limit thereof is generally 10 times by weight, preferably 2 times by weight, the amount of the poly(alkylene ether) glycol. The unsaturated-bond elimination treatment may be conducted either batchwise or continuously. Examples of methods for the continuous treatment include a method in which feed materials including the poly(alkylene ether) glycol, water, and a solvent are continuously supplied to a column type reaction vessel packed with a metal catalyst.

The catalyst used for the unsaturated-bond elimination treatment may be separated from the liquid reaction mixture after the reaction and recycled. Examples of separation methods in the case of the batchwise treatment include a method in which the catalyst is separated by filtration, centrifugal separation, etc. There are cases where to wash the catalyst used with an appropriate solvent is effective. Examples of the washing solvent include methanol, ethanol, propanol, butanol, tetrahydrofuran, ethyl ether, propyl ether, butyl ether, water, ethyl acetate, 1,3-propanediol, toluene, and acetone. In the case of a fixed-bed reaction vessel, the activity of the catalyst can be recovered in some degree by washing the catalyst with any of these solvents at an appropriate temperature.

The degree of diminution of unsaturated terminal groups of the poly(alkylene ether) glycol by the unsaturated-bond elimination treatment is generally 20% or higher, preferably 50% or higher, more preferably 75% or higher.

<Properties of the Polyether Polyol>

The number-average molecular weight of the polyether polyol to be used in the invention can be regulated by selecting the kind of the catalyst to be used or changing the catalyst amount. The lower limit thereof is generally 1,000, preferably 2,500, more preferably 2, 700, even more preferably 2,800, especially preferably 3,000. The upper limit thereof is generally 5,000, preferably 4,500, more preferably 4,000, even more preferably 3,800, especially preferably 3,500. In case where the number-average molecular weight of the polyether polyol is too high, there is a tendency that this polyether polyol or a prepolymer or prepolymer solution has too high a viscosity, resulting in poor suitability for operation or poor productivity, or that the polyurethane polymer obtained has impaired low-temperature properties. In case where the number-average molecular weight thereof is too low, there is a tendency that the polyurethane polymer obtained is rigid and does not have sufficient flexibility or that the polyurethane polymer obtained has insufficient properties concerning strength and elastic performances including elongation or has an excessive residual strain when subjected to repetitions of stretching and recovery.

The polyether polyol to be used in the invention is one in which the ratio of the weight-average molecular weight to the number-average molecular weight (Mw/Mn), which is an index to molecular weight distribution, is preferably 1.5 or higher, more preferably 2.0 or higher, and is preferably 3.0 or lower, more preferably 2.5 or lower.

The Hazen color number of the polyether polyol is preferably as close to 0 as possible. The upper limit thereof is generally 500, preferably 400, more preferably 200, most preferably 50.

The proportion of terminal allyl groups is generally 10% or lower, preferably 5% or lower, more preferably 1% or lower, especially preferably 0%, based on hydroxyl groups. In case where the amount of terminal allyl groups is too large, there is a tendency that a polyurethane and a polyurethane-urea each having a sufficiently increased molecular weight is not obtained and it is difficult to impart desired performances. In case where the amount thereof is too small, there is a possibility that the rate of reaction might be excessively increased to cause gelation or the like in the reaction for polyurethane and polyurethane-urea formation. However, in the case where the amount of terminal allyl groups is too small, the problem that molecular weight increases excessively can be avoided by causing a monofunctional ingredient to coexist in the reaction system in an appropriate amount by an ordinary method.

<(b) Polyisocyanate Compound>

Examples of the polyisocyanate compound to be used in the invention include aromatic diisocyanates such as 2,4- or 2,6-tolylene diisocyanate, xylylene diisocyanate, 4,4'-diphenylmethane diisocyanate (MDI), 2,4'-MDI, p-phenylene diisocyanate, 1,5-naphthalene diisocyanate, and tolidine diisocyanate, aliphatic diisocyanates having an aromatic ring, such as $\alpha,\alpha,\alpha',\alpha'$-tetramethylxylylene diisocyanate, aliphatic diisocyanates such as methylene diisocyanate, propylene diisocyanate, lysine diisocyanate, 2,2,4- or 2,4,4-trimethylhexamethylene diisocyanate, and 1,6-hexamethylene diisocyanate, and alicyclic diisocyanates such as 1,4-cyclohexane diisocyanate, methylcyclohexane diisocyanate (hydrogenated TDI), 1-isocyanato-3-isocyanatomethyl-3,5,5-trimethylcyclohexane (IPDI), 4,4'-dicyclohexylmethane diisocyanate, and isopropylidenedicyclohexyl 4,4'-diisocyanate. These compounds may be used alone or in combination of two or more thereof. In the invention, aromatic polyisocyanates having especially high reactivity are preferred. In particular, tolylene diisocyanate (TDI) and diphenylmethane diisocyanate (MDI) are preferred. Compounds obtained by modifying part of the NCO groups of a polyisocyanate into a urethane, urea, biuret, allophanate, carbodiimide, oxazolidone, amide, imide, etc. may also be used. The polynuclear compounds include ones containing isomers other than those shown above.

The amount of these polyisocyanate compounds to be used is generally from 0.1 equivalent to 10 equivalents, preferably from 0.8 equivalents to 1.5 equivalents, more preferably from 0.9 equivalents to 1.05 equivalents, to the hydroxyl groups of the polyether polyol and the hydroxyl groups and amino groups of the chain extender.
In case where a polyisocyanate is used in too large an amount, unreacted isocyanate groups tend to cause an undesirable reaction, making it difficult to obtain desired properties. In case where a polyisocyanate is used in too small an amount, there is a tendency that the polyurethane and polyurethane-urea do not have a sufficiently increased molecular weight and desired performances are not imparted thereto.

<(c) Chain Extender>

Chain extenders in the invention are mainly classified into compounds having 2 or more hydroxyl groups, compounds having 2 or more amino groups, and water. Of these, preferred chain extenders for polyurethane applications are short-chain polyols, i.e., compounds having 2 or more hydroxyl groups. Preferred for polyurethane-urea applications are polyamine compounds, i.e., compounds having 2 or more amino groups. With respect to water among those chain extenders, it is preferred to minimize the amount of water in order to stably conduct the reaction.
In producing a polyurethane resin according to the invention, it is more preferred to use a combination of compounds having a molecular weight (number-average molecular weight) of 500 or lower as a chain extender from the standpoint of resin properties. This is because use of this chain extender imparts improved rubber elasticity to a polyurethane elastomer.

Examples of the compounds having 2 or more hydroxyl groups include aliphatic glycols such as ethylene glycol, diethylene glycol, triethylene glycol, propylene glycol, dipropylene glycol, tripropylene glycol, 1,3-propanediol, 1,2-butanediol, 1,3-butanediol, 1,4-butanediol, 2,3-butanediol, 3-methyl-1,5-pentanediol, neopentyl glycol, 2-methyl-1,3-propanediol, 2-methyl-2-propyl-1,3-propanediol, 2-butyl-2-ethyl-1,3-propanediol, 1,5-pentanediol, 1,6-hexanediol, 2-methyl-2,4-pentanediol, 2,2,4-trimethyl-1,3-pentanediol, 2-ethyl-1,3-hexanediol, 2,5-dimethyl-2,5-hexanediol, 2-butyl-2-hexyl-1,3-propanediol, 1,8-octanediol, 2-methyl-1,8-octanediol, and 1,9-nonanediol, alicyclic glycols such as bishydroxymethylcyclohexane, and glycols having an aromatic ring, such as xylylene glycol and bishydroxyethoxybenzene.

Examples of the compounds having 2 or more amino groups include aromatic diamines such as 2,4- or 2,6-tolylenediamine, xylylenediamine, and 4,4'-diphenylmethanediamine, aliphatic diamines such as ethylenediamine, 1,2-propylenediamine, 1,6-hexanediamine, 2,2-dimethyl-1,3-propanediamine, 2-methyl-1,5-pentanediamine, 1,3-diaminopentane, 2,2,4- or 2,4,4-trimethylhexanediamine, 2-butyl-2-ethyl-1,5-pentanediamine, 1,8-octanediamine, 1,9-nonanediamine, and 1,10-decanediamine, and alicyclic diamines such as 1-amino-3-aminomethyl-3,5,5-trimethylcyclohexane (IPDA), 4,4'-dicyclohexylmethanediamine (hydrogenated MDA), isopropylidenecyclohexyl-4,4'-diamine, 1,4-diaminocyclohexane, and 1,3-bisaminomethylcyclohexane. These chain extenders may be used alone or in combination of two or more thereof. In the invention, ethylenediamine, propylenediamine, 1,3-diaminopentane, and 2-methyl-1,5-pentanediamine are preferred of these examples.

The amount of these chain extenders to be used is not particularly limited. However, the amount thereof is generally from 0.1 equivalent to 10 equivalents, preferably from 0.5 equivalents to 2.0 equivalents, more preferably from 0.8 equivalents to 1.2 equivalents, to the polyether polyol. In case where a chain extender is used in too large an amount, the polyurethane and polyurethane-urea obtained tend to be too rigid to have desired properties or tend to be less apt to dissolve in solvents or difficult to process. In case where a chain extender is used in too small an amount, the polyurethane and polyurethane-urea obtained tend to be too soft to have sufficient strength, elastic recovery performance, or elasticity retentivity or tend to have poor high-temperature properties.

In the case where the polyurethane and polyurethane-urea to be produced by the invention are for use in high-performance polyurethane elastomer applications such as elastic polyurethane fibers and synthetic leathers, examples of raw-material combinations include the following. A combination including: a poly(trimethylene ether) glycol having a molecular weight of from 1,000-5,000 represented by formula (1) given above, as one of active-hydrogen compound ingredients; ethylenediamine, propylenediamine, hexanediamine, xylylenediamine, 2-methyl-1,5-pentanediamine, 1,4-butanediol, 1,3-propanediol, etc. as a chain extender; and 4,4'-diphenylmethane diisocyanate or 2,4- or 2,6-tolylene diisocyanate as a polyisocyanate ingredient.

A chain terminator having one active-hydrogen group can be used according to need for the purpose of regulating the molecular weight of the polyurethane. Examples of this chain terminator include aliphatic monools, which have a hydroxyl group, such as ethanol, propanol, butanol, and hexanol, and aliphatic monoamines, which have an amino group, such as diethylamine, dibutylamine, monoethanolamine, and diethanolamine. These may be used alone or in combination of two or more thereof.

<Other Additives>

Besides the ingredients described above, other additives may be added to the polyurethane of the invention according to need. Examples of the additives include antioxidants such as "CYANOX 1790" (manufactured by CYANAMID Co.), "IRGANOX 245" and "IRGANOX 1010" (both manufactured by Ciba Specialty Chemicals Co.), "Sumilizer GA-80" (manufactured by Sumitomo Chemical Co., Ltd.), and 2,6-dibutyl-4-methylphenol (BHT), light stabilizers such as "TINUVIN 622LD" and "TINUVIN 765" (both manufactured by Ciba Specialty Chemicals Co.) and "SANOL LS-2626" and "SANOL LS-765" (both manufactured by Sankyo Company, Ltd.), ultraviolet absorbers such as "TINUVIN 328" and "TINUVIN 234" (both manufactured by Ciba Specialty Chemicals Co.), silicone compounds such as dimethylsiloxane/polyoxyalkylene copolymers, additive and reactive flame retardants such as red phosphorus, organophosphorus compounds, phosphorus- and halogen-containing organic compounds, bromine- or chlorine-containing organic compounds, ammonium polyphosphate, aluminum hydroxide, and antimony oxide, colorants such as pigments, e.g., titanium dioxide, dyes, and carbon black, hydrolysis inhibitors such as carbodiimide compounds, fillers such as short glass fibers, carbon fibers, alumina, talc, graphite, melamine, and china clay, lubricants, oils, surfactants, other inorganic extenders, and organic solvents.

<Process for Producing Polyurethane>

For producing the polyurethane resin of the invention, the following are essential raw materials: (a) a polyether polyol obtained by the dehydration condensation reaction of a polyol and containing a 1,3-propanediol unit; (b) a polyisocyanate compound; and (c) a chain extender.

In producing the polyurethane, all production processes in general experimental/industrial use may be employed. However, a feature of the invention resides in that the polyurethane is produced in the co-presence of an aprotic polar solvent. The respective amounts of the compounds to be used may be the same as those described above unless otherwise indicated. Examples of the process for production in the co-presence of an aprotic polar solvent are shown below. However, the production process is not particularly limited so long as the polyurethane is produced in the co-presence of an aprotic polar solvent.

Examples of the production process include a process in which (a), (b) ; and (c) are reacted together (one-stage process) and a process in which (a) and (b) are first reacted to form a prepolymer terminated at each end by an isocyanate group and this prepolymer is then reacted with (c) (two-stage process). Of these processes, the two-stage process includes a step in which the polyether polyol is reacted beforehand with a polyisocyanate used in an amount not smaller than one equivalent to the polyether polyol to thereby form an intermediate blocked at each end with an isocyanate. This intermediate corresponds to soft segments of the polyurethane. A feature of this process resides in that since a prepolymer is first formed and then reacted with a chain extender, the molecular weight of soft segment parts can be easily regulated and this facilitates clear phase separation between soft segments and a hard segment and further facilitates impartation of elastomer performances. Especially when the chain extender is a diamine, this chain extender considerably differs in the rate of reaction with isocyanate groups from the hydroxyl groups of the polyether polyol. Consequently, it is more preferred to conduct polyurethane-urea formation by the prepolymer process.

<One-Stage Process>

The one-stage process, which is also called a one-shot process, is a method in which (a), (b), and (c) are introduced together into a reactor and thereby reacted. The amounts of the compounds to be used may be the same as those described above.

In the invention, the reaction in the one-stage process may be conducted not in the absence of any solvent but in the presence of an organic solvent. Examples of the solvent to be used include ketones such as acetone, methyl ethyl ketone, methyl isobutyl ketone, and cyclohexanone, ethers such as dioxane and tetrahydrofuran, hydrocarbons such as hexane and cyclohexane, aromatic hydrocarbons such as toluene and xylene, esters such as ethyl acetate and butyl acetate, halogenated hydrocarbons such as chlorobenzene, trichlene, and perchlene, aprotic polar solvents such as γ-butyrolactone, dimethyl sulfoxide, N-methyl-2-pyrrolidone, dimethylformamide, and dimethylacetamide, and mixtures of two or more of these.

In the invention, aprotic polar solvents are preferred of these organic solvents from the standpoint of solubility in the case of polyurethane production. Use of an aprotic polar solvent characterizes the invention. Preferred examples of the aprotic polar solvents include N,N-dimethylacetamide, N,N-dimethylformamide, N-methylpyrrolidone, and dimethyl sulfoxide. Especially preferred are dimethylformamide and dimethylacetamide.

In the case of the one-shot process (the reactants are reacted in one stage), the NCO/active-hydrogen group (polyether polyol and chain extender) equivalent ratio in the reaction may be in the following range. The lower limit of the ratio is generally 0.50, preferably 0.8, while the upper limit of the ratio is generally 1.5, preferably 1.2. In case where the ratio is too high, excess isocyanate groups tend to cause side reactions to exert an unfavorable influence on the properties of the polyurethane. In case where the ratio is too low, the polyurethane obtained tends to have an insufficiently increased molecular weight to pose problems concerning strength and thermal stability.

The ingredients are reacted usually at 0-250°C. However, the temperature varies depending on the amount of the solvent, reactivity of the raw materials used, reaction equipment, etc. Too low temperatures are undesirable because the reaction proceeds too slowly and the raw materials and polymerization product have low solubility, resulting in poor productivity. On the other hand, too high temperatures are undesirable because side reactions and decomposition of the polyurethane resin occur. The reaction may be conducted at a reduced pressure with degassing.

A catalyst and a stabilizer or the like may be added for the reaction according to need. Examples of the catalyst include triethylamine, tributylamine, dibutyltin dilaurate, stannous octylate, acetic acid, phosphoric acid, sulfuric acid, hydrochloric acid, and sulfonic acids. Examples of the stabilizer include 2,6-dibutyl-4-methylphenol, distearyl thiodipropionate, di-β-naphthylphenylenediamine, and tri(dinonylphenyl) phosphite.

<Two-Stage Process>

The two-stage process which may be employed is also called a prepolymer process. In this process, a polyisocyanate ingredient is reacted beforehand with the polyol ingredient usually in an equivalent ratio of from 1.0 to 10.00 to produce a prepolymer and a polyisocyanate ingredient or an active-hydrogen compound ingredient, such as a polyhydric alcohol or an amine compound, is added to the prepolymer to thereby conduct a two-stage reaction. Especially useful is a process in which a polyisocyanate compound is reacted with the polyol ingredient in an amount not smaller than one equivalent to the polyol ingredient to form a prepolymer terminated at each end by NCO and a short-chain diol or diamine as a chain extender is then caused to act on the prepolymer to obtain a polyurethane.

A feature of the invention resides in that the two-stage process is conducted not in the absence of any solvent but using an organic solvent. Examples of the solvent to be used include ketones such as acetone, methyl ethyl ketone, methyl isobutyl ketone, and cyclohexanone, ethers such as dioxane and tetrahydrofuran, hydrocarbons such as hexane and cyclohexane, aromatic hydrocarbons such as toluene and xylene, esters such as ethyl acetate and butyl acetate, halogenated hydrocarbons such as chlorobenzene, trichlene, and perchlene, aprotic polar solvents such as γ-butyrolactone, dimethyl sulfoxide, N-methyl-2-pyrrolidone, dimethylformamide, and dimethylacetamide, and mixtures of two or more of these.

In the invention, aprotic polar solvents are preferred of these organic solvents from the standpoint of solubility in the case of polyurethane production. Use of an aprotic polar solvent characterizes the invention. Preferred examples of the aprotic polar solvents include N,N-dimethylacetamide, N,N-dimethylformamide, N-methylpyrrolidone, and dimethyl sulfoxide. Especially preferred are dimethylformamide and dimethylacetamide.

In synthesizing a prepolymer, any of the following methods may be used: (1) a polyisocyanate compound is first reacted directly with the polyether polyol without using any solvent to synthesize a prepolymer and this prepolymer is used as it is; (2) a prepolymer is synthesized by method (1) and then dissolved in a solvent before use; and (3) a solvent is used from the beginning to react a polyisocyanate with the polyether glycol. In the case of method (1), it is important in the invention that a polyurethane should be obtained in the state of coexisting with a solvent. This is accomplished, for example, by a method in which a chain extender to be used is dissolved in a solvent or a method in which the prepolymer and a chain extender are simultaneously introduced into a solvent.

The NCO/active-hydrogen group (polyether polyol) equivalent ratio in the reaction may be in the following range. The lower limit of the ratio is generally 1, preferably 1.1, while the upper limit of the ratio is generally 10, preferably 5, more preferably 3. In case where the ratio is too low, excess isocyanate groups tend to cause side reactions to exert an unfavorable influence on the properties of the polyurethane. In case where the ratio is too low, the polyurethane obtained tends to have an insufficiently increased molecular weight to pose problems concerning strength and thermal stability.

The amount of the chain extender to be used is not particularly limited. However, the amount thereof may be in the following range. The lower limit of the amount thereof is generally 0.8 equivalents, preferably 1 equivalent, to the NCO groups contained in the prepolymer. The upper limit thereof is generally 2 equivalents, preferably 1.2 equivalents, to the NCO groups.

A monofunctional organic amine or alcohol may be caused to coexist during the reaction.

The ingredients are reacted usually at 0-250°C. However, the temperature varies depending on the amount of the solvent, reactivity of the raw materials used, reaction equipment, etc. Too low temperatures are undesirable because the reaction proceeds too slowly and the raw materials and polymerization product have low solubility, resulting in poor productivity. On the other hand, too high temperatures are undesirable because side reactions and decomposition of the polyurethane resin occur. The reaction may be conducted at a reduced pressure with degassing.

A catalyst and a stabilizer or the like may be added for the reaction according to need. Examples of the catalyst include triethylamine, tributylamine, dibutyltin dilaurate, stannous octylate, acetic acid, phosphoric acid, sulfuric acid, hydrochloric acid, and sulfonic acids. Examples of the stabilizer include 2,6-dibutyl-4-methylphenol, distearyl thiodipropionate, di-$\beta$-naphthylphenylenediamine, and tri(dinonylphenyl) phosphite. However, when the chain extender is one having high reactivity, such as, e.g., a short-chain aliphatic amine, then it is preferred to conduct the reaction without adding a catalyst.

<Properties of the Polyurethane>

The polyurethane produced by the process described above is obtained generally in the state of being dissolved in a solvent because the reaction was conducted in the presence of the solvent. However, values of properties are not influenced by whether the polyurethane is in a solution state or in a solid state, so long as there are no particular limitations. The weight-average molecular weight of the polyurethane varies depending on uses. However, the weight-average molecular weight of the polyurethane in the solution resulting from polymerization is generally 10,000-1,000,000, preferably 50,000-500,000, more preferably 100,000-400,000, especially preferably 100,000-300,000. The molecular weight distribution Mw/Mn thereof may be 1.5-3.5 and is preferably 1.8-2.5, more preferably 1.9-2.3.

When the polyurethane is in the form of a fiber, film, or moisture-permeable resin molding, the weight-average molecular weight of the polyurethane is generally 10,000-1,000,000, preferably 50,000-500,000, more preferably 100,000-400,000, especially preferably 150,000 to 350,000. The molecular weight distribution Mw/Mn may be 1.5-3.5 and is preferably 1.8-2.5, more preferably 1.9-2.3.

The polyurethane obtained by the production process described above preferably contains a hard segment in an amount of 1-10% by weight based on the weight of the whole polyurethane polymer. The amount of the hard segments is more preferably 3-8.5% by weight, even more preferably 4-8% by weight, especially preferably 5-7% by weight. In case where the amount of the hard segments is too large, there is a tendency that the polyurethane polymer obtained does not show sufficient flexibility or elastic performances. When a solvent is used, this polyurethane tends to show reduced solubility and poor processability. In case where the amount of the hard segments is too small, this urethane polymer tends to be too flexible. Namely, this polymer has poor processability and does not have sufficient strength or elastic performances.

The term hard segment in the invention means the proportion of the weight of combined isocyanate and amine parts to the whole weight, the proportion being calculated using the following equation based on P.J. Flory, Journal of American Chemical Society, 58, 1877-1885 (1936).

$$\text{Hard segment } (\%) = [(R-1)(Mdi+Mda)/\{Mp+R\cdot Mdi+(R-1)\cdot Mda+Mc\cdot Gc\}]\times 100$$

In the equation,
R = (number of moles of isocyanate)/[(number of moles of hydroxyl groups of polyether polyol)+(number of moles of terminal allyl groups)],
Mdi = number-average molecular weight of diisocyanate,
Mda = number-average molecular weight of diamine,
Mp = number-average molecular weight of polyether polyol,

Mc = molecular weight of terminal allyl group,

Gc = equivalent amount of terminal allyl groups (number of moles of terminal allyl groups per mole of polyether polyol).

The polyurethane solution obtained by the invention is less apt to gel and changes little in viscosity with time. Namely, the solution has satisfactory storage stability. In addition, the solution has low thixotropic properties, and this is advantageous for forming the polyurethane into a film, fiber, etc. The polyurethane concentration of the polyurethane solution in an aprotic solvent is generally 1-99% by weight, preferably 5-90% by weight, more preferably 10-70% by weight, especially preferably 15-50% by weight, based on the weight of the whole solution. In case where the amount of the polyurethane is too small, it is necessary to remove the solvent in a large amount and this tends to result in reduced productivity. In case where the amount thereof is too large, this solution tends to have too high a viscosity, resulting in poor suitability for operation or poor processability.

In the case where the polyurethane solution is to be stored over a prolonged time period, it is preferred to store the solution in an inert gas atmosphere such as nitrogen or argon, although this is not especially designated.

<Polyurethane Moldings/Uses>

The polyurethane and urethane prepolymer solution therefor produced by the invention can have a variety of properties, and can be extensively used as or in foams, elastomers, coating materials, fibers, adhesives, flooring materials, sealants, medical materials, artificial leathers, etc.

The polyurethane, polyurethane-urea, and urethane prepolymer solution therefor produced by the invention are usable as a casting polyurethane elastomer. Examples of products include rolls such as rolling rolls, papermaking rolls, business appliances, and pretensioning rolls; solid tires, casters, or the like for fork lift trucks, motor vehicle newtrams, carriages, and carriers; and industrial products such as conveyor belt idlers, guide rolls, pulleys, steel pipe linings, rubber screens for ore, gears, connection rings, liners, impellers for pumps, cyclone cones, and cyclone liners. Furthermore, the polyurethane, polyurethane-urea, and urethane prepolymer solution are applicable to belts for OA apparatus, paper feed rolls, squsegees, cleaning blades for copying, snowplows, toothed belts, and surf rollers.

The polyurethane and urethane prepolymer solution therefor produced by the invention are applicable also as thermoplastic elastomers. For example, the polyurethane and the urethane prepolymer solution can be used as tubes or hoses in pneumatic apparatus for use in the food and medical fields, coating apparatus, analytical instruments, physical and chemical apparatus, constant delivery pumps, water treatment apparatus, and industrial robots, and as spiral tubes, hoses for fire fighting, etc. Furthermore, the polyurethane and the urethane prepolymer solution are usable as belts, such as round belts, V-belts, and flat belts in various transmission mechanisms, spinning machines, packaging apparatus, printing machines, etc. Examples of elastomer applications further include the heeltops of footwear, the soles of shoes, apparatus parts such as cup rings, packings, ball joints, bushings, gears, and rolls, sports goods, leisure goods, and the belts of watches. Examples of automotive parts include oil stoppers, gear boxes, spacers, chassis parts, interior trims, and tire chain substitutes. Examples of the applications further include films such as key board films and automotive films, curl cords, cable sheaths, bellows, conveying belts, flexible containers, binders, synthetic leathers, dipping products, and adhesives.

The polyurethane and urethane prepolymer solution therefor produced by the invention are applicable also as a solvent-based two-pack type coating material to wood products such as musical instruments, family Buddhist altars, furniture, decorative plywoods, and sports goods. The polyurethane and urethane prepolymer solution are usable also as a tar-epoxy-urethane for motor vehicle repair.

The polyurethane and urethane prepolymer solution therefor produced by the invention are usable as a component of moisture-curable one-pack type coating materials, blocked-isocyanate type solvent-based coating materials, alkyd resin coating materials, urethane-modified synthetic resin coating materials, and ultraviolet-curable coating materials. Such coating materials can be used, for example, as coating materials for plastic bumpers, strippable paints, coating materials for magnetic tapes, overprint varnishes for floor tiles, flooring materials, paper, and woodgrained films, varnishes for wood, coil coatings for high processing, optical-fiber protection coatings, solder resists, topcoats for metal printing, base coats for vapor deposition, and white coats for food cans.

The polyurethane and urethane prepolymer solution therefor produced by the invention are applicable as an adhesive to food packaging, shoes, footwear, magnetic-tape binders, decorative papers, wood, and structural members. The polyurethane and urethane prepolymer solution can be used also as a component of adhesives and hot-melt adhesives for low-temperature use.

The polyurethane and urethane prepolymer solution therefor produced by the invention are usable as a binder in applications such as magnetic recording media, inks, castings, burned bricks, grafting materials, microcapsules, granular fertilizers, granular agricultural chemicals, polymer cement mortars, resin mortars, rubber chip binders, reclaimed foams, and glass fiber sizing.

The polyurethane and urethane prepolymer solution therefor produced by the invention are usable as a component of fiber processing agents for shrink proofing, crease proofing, water repellent finishing, etc.

The polyurethane, polyurethane-urea, and urethane prepolymer solution therefor produced by the invention are applicable as a sealant/caulking material to walls formed by concrete placing, induced joints, the periphery of sashes, wall type PC joints, ALC joints, and joints of boards and as a sealant for composite glasses, sealant for heat-insulating sashes, sealant for motor vehicles, etc.

The polyurethane and urethane prepolymer solution therefor produced by the invention are usable as medical materials. The polyurethane and prepolymer solution are usable as or for blood-compatible materials such as tubes, catheters, artificial hearts, artificial blood vessels, artificial valves, and the like, or as or for throwaway materials such as catheters, tubes, bags, surgical gloves, artificial-kidney potting materials, and the like.

The polyurethane, polyurethane-urea, and urethane prepolymer solution therefor produced by the invention can be used, after terminal modification, as a raw material for UV-curable coating materials, electron-beam-curable coating materials, photosensitive resin compositions for flexographic printing plates, optical-fiber cladding material compositions of the photocurable type, etc.

It is especially preferred that the polyurethane produced by the invention should be used as a film or a fiber from the standpoint of taking advantage of features of the polyurethane, such as elastic performances and moisture permeability. Specific preferred examples of such applications are medical/hygienic materials, artificial leathers, and elastic fibers for garments.

Examples of applications of the polyurethane and urethane prepolymer solution therefor produced by the invention were mentioned above. However, applications of the invention should not be construed as being limited to those examples. Processes for producing a film and fiber are described below. However, the processes should not be construed as being especially limited.

<Processes for Producing Film>

Processes for producing a film are not particularly limited and known processes can be used. Examples of film production processes include a wet film formation process in which a polyurethane resin solution is applied to a support or release material and the solvent and other soluble substances are extracted in a coagulating bath and a dry film formation process in which a polyurethane resin solution is applied to a support or release material and the solvent is removed, e.g., by heating or under vacuum. The support to be used for the dry film formation is not particularly limited. However, use may be made of a polyethylene or polypropylene film, glass, metal, releasant-coated paper or cloth, or the like. Methods for the application are not particularly limited, and any of known apparatus such as a knife coater, roll coater, spin coater, and gravure coater may be used. Any desired drying temperature can be set according to the power of the dryer. It is, however, necessary to select a temperature range which does not result in insufficient drying or rapid solvent removal. The range is preferably from room temperature to 300°C, more preferably from 60°C to 200°C.

<Properties of the Film>

The film of the invention has a thickness of generally 10-1,000 $\mu$m, preferably 10-500 $\mu$m, more preferably 10-100 $\mu$m. In case where the film is too thick, sufficient moisture permeability tends not to be obtained. In case where the film is too thin, there is a tendency that the film is apt to have pinholes or the film is apt to suffer blocking and have poor handleability. This film can be advantageously used as a pressure-sensitive adhesive film for medical use, hygienic material, packing material, film for decoration, moisture-permeable material, etc. The film may be one formed by application to a support such as, e.g., a fabric or nonwoven fabric. In this case, a thickness smaller than 10 $\mu$m may suffice.

The elongation at break thereof is generally 100% or higher, preferably 200% or higher, more preferably 300% or higher, even more preferably 500% or higher, especially preferably 800% or higher.

The strength at break thereof is generally 5 MPa or higher, preferably 10 MPa or higher, more preferably 20 MPa or higher, even more preferably 30 MPa or higher, especially preferably 60 MPa or higher.

In a 300% stretching/contraction repetition test at 23°C, the retention of elasticity (Hr1/H1) defined as the ratio of the stress at 150% stretching in the first contraction operation to the stress at 150% stretching in the first stretching operation is generally 10% or higher, preferably 20% or higher, more preferably 30% or higher, even more preferably 40% or higher. The retention of elasticity (Hr5/H5) defined as the ratio of the stress at 150% stretching in the fifth contraction operation to the stress at 150% stretching in the fifth stretching operation in the same test is generally 30% or higher, preferably 50% or higher, more preferably 70% or higher, even more preferably 85% or higher.

Furthermore, in the 300% stretching/contraction repetition test at 23°C, the retention of elasticity (H2/H1) defined as the ratio of the stress at 150% stretching in the second stretching operation to the stress at 150% stretching in the first stretching operation is generally 20% or higher, preferably 40% or higher, more preferably 50% or higher, even more preferably 60% or higher.

Moreover, the residual strain in the second operation in the 300% stretching/contraction repetition test at 23°C is generally 40% or lower, preferably 30% or lower, more preferably 20% or lower, especially 15% or lower. The residual strain in the fifth operation is generally 50% or lower, preferably 35% or lower, more preferably 25% or lower, especially preferably 20% or lower.

The residual strain in a 300% stretching/contraction repetition test at -10°C is generally 300% or lower, preferably 120% or lower, more preferably 100% or lower, even more preferably 60% or lower.

Furthermore, in the 300% stretching/contraction repetition test at -10°C, the retention of elasticity (Hr1/H1) defined as the ratio of the stress at 150% stretching in the first contraction operation to the stress at 150% stretching in the first stretching operation is preferably 1% or higher, more preferably 5% or higher, even more preferably 10% or higher.

In a 300% stretching/contraction repetition test at 100°C, the residual strain may be 200% or lower and is preferably 100% or lower, more preferably 50% or lower, even more preferably 35% or lower.

The moisture permeability thereof as calculated for a film thickness of 50 $\mu$m is generally 500 g/m$^2$·24 h or higher, preferably 1, 000 g/m$^2$·24 h or higher, more preferably 2,000 g/m$^2$·24 h or higher, even more preferably 3,000 g/m$^2$·24 h or higher.

Incidentally, properties of the polyurethane film correlate exceedingly well with properties of fibers. The same property values as those obtained in, e.g., tests of the film tend to be obtained in tests of fibers.

<Process for Producing Elastic Polyurethane-Urea Fiber>

Although the polyurethane-urea among polyurethanes according to the invention is usable in various applications, it exhibits excellent performances when used especially as elastic fibers. Preferred examples of production conditions in the case of producing a polyurethane-urea for elastic fibers are hence shown below.

First, a polyether polyol obtained by the dehydration condensation reaction of MDI with a polyol and containing at least 50% by mole 1,3-propanediol units is reacted in an NCO/OH ratio of from 1.1 to 3.0 to produce an NCO-terminated prepolymer. According to need, this reaction may be conducted in the presence of a monool, such as, e.g., BuOH or hexanol, added in an amount of about 500-5,000 ppm of the PTMG. In this case, it is preferred to react the polyether polyol in a bulk state without using any solvent, because this method is effective in inhibiting side reactions. The prepolymer obtained is dissolved in an aprotic polar solvent such as dimethylacetamide (DMAc) or dimethylformamide (DMF) and the solution is cooled to preferably 0-30°C, more preferably 0-10°C. In case where this prepolymer solution has too high a temperature, there is a possibility that the chain extension reaction in the subsequent step might proceed too rapidly and become uneven, resulting in abnormal reactions such as gelation. On the other hand, when the temperature thereof is too low, there are cases where prepolymer dissolution requires much time or the prepolymer does not dissolve sufficiently and partly remains undissolved, making it impossible to satisfactorily carry out the reaction. The concentration of the prepolymer solution is not particularly limited. However, the concentration thereof may be 10-90% by weight and is preferably 20-70% by weight, more preferably 35-50% by weight. Subsequently, the cooled prepolymer solution is subjected to chain extension by reacting it with an amine solution prepared by dissolving am aliphatic diamine having a methylene chain length of 6 or shorter, such as propanediamine, ethylenediamine, 2-methyl-1,5-pentanediamine, or hexanediamine, or an aromatic diamine, such as xylylenediamine, in DMAc or DMF. When an aliphatic diamine having too large a methylene chain length is used alone, there are cases where the resultant polyurethane-urea gives elastic polyurethane fibers having reduced properties. It is preferred to use a diamine chain extender including at least 50% by mole ethylenediamine as the main component. The proportion of ethylenediamine to be used is more preferably 70% by mole or higher, even more preferably 80% or higher, especially preferably 90% or higher. In the case of using an aliphatic amine having high reactivity, it is preferred to conduct the reaction without adding any catalyst.

The total amount of the diamine chain extender to be used in the case where the invention is applied to elastic polyurethane-urea fibers may be such that hard segments are yielded in an amount of 1-30% by weight, preferably 2-20% by weight, more preferably 3-15%, even more preferably 3-10%, especially preferably 3-9%, based on the polyurethane-urea polymer. When the amount of hard segments is too large, there are cases where the resultant polyurethane-urea is less apt to dissolve in a solvent when formed into an elastic fiber or a film or where the polyurethane-urea gives a fiber or film having insufficient elongation. When the amount of hard segments is too small, there is a possibility that the resultant polyurethane-urea might give a fiber or film which is too flexible, has too low strength, is low in elastic recovery and stress retention, and has high residual strain.

After completion of the chain extension reaction, a DMAc or DMF solution of an aliphatic monoamine such as diethylamine, dibutylamine, monoethanolamine, or diethanolamine is added to terminate the reaction. In place of this operation, use may be made of a method in which the monoamine is mixed with a diamine beforehand and this mixture is used to cause a chain extension reaction and a chain termination reaction to proceed simultaneously. In conducting a chain extension reaction, the prepolymer solution may be added to the diamine solution or the diamine solution may be added to the prepolymer solution. Alternatively, a constant-delivery mixer for two liquids may be used to continuously react the two liquids. The polyurethane-urea solution obtained is mixed with additives such as, e.g., an antioxidant, ultraviolet absorber, and yellowing inhibitor and then optionally treated with a filter to remove foreign substances. Thereafter, an elastic polyurethane-urea fiber is produced therefrom by a spinning method such as a dry spinning or wet spinning method.

The weight-average molecular weight of the polyurethane-urea varies depending on intended uses. However, the weight-average molecular weight of the polyurethane-urea in the solution resulting from polymerization is generally 10,000-1,000,000, preferably 50,000-500,000, more preferably 100,000-400,000, even more preferably 100,000-300,000. The molecular weight distribution Mw/Mn thereof may be 1.5-3.5 and is preferably 1.8-2.5, more preferably 1.9-2.3.

The weight-average molecular weight of the polyurethane-urea for elastic fibers is generally 10,000-1,000,000, preferably 50,000-500,000, more preferably 100,000-400,000, even more preferably 150,000-350,000. The molecular weight distribution Mw/Mn thereof may be 1.5-3.5 and is preferably 1.8-2.5, more preferably 1.9-2.3.

The polyurethane-urea solution obtained by the invention has satisfactory storage stability, i.e., is less apt to gel and changes little in viscosity with time. In addition, the solution has low thixotropic properties. These properties are advantageous in producing elastic fibers.

The elastic polyurethane-urea fiber thus obtained has high elongation at break, fluctuates little in stress with deformation or strain in stretching, has a small stress hysteresis loss in expansion/contraction, and has a low residual strain after expansion/contraction under low-temperature conditions. Consequently, this fiber can be used also in fields where high elasticity, low-temperature properties, and the like are required, such as underwear, leg knits, stockings, diaper covers, gathers of disposable diapers, foundations, bandages, wig base fabrics, sock mouth rubbers, sports garments, swimsuits, various belts, narrow tapes, and articles for sports or outer applications.

For producing a fiber from the polyurethane obtained using a short-chain polyol as a chain extender, known techniques can be utilized.

<Properties of the Elastic Polyurethane Fiber>

The elastic polyurethane fiber is superior to other elastic fibers in comprehensive properties including strength, elongation at break, stretching recovery, ultraviolet resistance, thermal deterioration resistance, hydrolytic resistance, and low-temperature properties. Especially when the polyether polyol according to the invention obtained by the dehydration condensation reaction of a polyol and containing at least 50% by mole 1,3-propanediol is used, those properties are remarkably satisfactory.

The strength at break thereof is generally 0.1 g/d or higher, preferably 0.9 g/d or higher. The elongation at break thereof is generally 300% or higher, preferably 500% or higher, more preferably 600% or higher, even more preferably 650% or higher.

The percentage recovery from stretching thereof as determined after 24-hour holding at a degree of stretching of 100% is generally 80% or higher, preferably 85% or higher, more preferably 90% or higher, even more preferably 92% or higher.

The retention of strength thereof after 45-hour irradiation with a Fade-O-meter, as ultraviolet resistance, is generally 50% or higher, preferably 70% or higher, more preferably 80% or higher, even more preferably 90% or higher. The retention of strength thereof after a 24-hour holding test at 120°C, as thermal deterioration resistance, is generally 50% or higher, preferably 70% or higher, more preferably 80% or higher, even more preferably 90% or higher, based on the strength before the test.

<Applications of the Polyurethane Fiber>

More specific examples of applications for which the fiber made of the polyurethane of the invention is suitable include legs, panty hoses, diaper covers, disposable diapers, sports garments, underwear, socks, stretchable garments with excellent fashionability, swimsuits, and leotards. This is because the fiber is excellent in recovery from stretching, elasticity, hydrolytic resistance, light resistance, oxidation resistance, oil resistance, and processability.

A feature of the excellent moisture permeability of this elastic fiber resides in that the garment made of the fiber is less apt to cause stuffiness and is comfortable to wear. The property of being low in stress fluctuation or being low in modulus enables, e.g., the garment to have the following feature. When the garment is put on, the arms can be passed through the sleeves with little force. Namely, this garment is extremely easily put on and off even by a small child or an aged person. Because the fiber gives a good fit feeling and has satisfactory conformability to movements, it can be used in applications such as sports garments and more fashionable garments. Furthermore, because the fiber has a high retention of elasticity in a stretching repetition test, a feature thereof resides in that the elastic performances thereof are less apt to be impaired even through repetitions of use. Moreover, the property of being low in residual strain and excellent in stress retentivity at 100°C brings about an advantage that a product made of this material can retain the properties of the elastic fiber even when exposed to high temperatures, for example, by allowing the product to stand, e.g., on the dashboard of a motor vehicle in summer.

EXAMPLES

The invention will be explained below in more detail by reference to Examples thereof. However, the invention should not be construed as being limited to the following Examples unless the invention departs from the spirit thereof. In the following Examples and Comparative Examples, analyses and measurements were made by the following methods.

<Number-Average Molecular Weight of Poly(Trimethylene Ether) Glycol>

The number-average molecular weight of a poly(trimethylene ether) glycol was determined in terms of hydroxyl value (KOH (mg)/g).

<Terminal Allyl Group Amount in Poly(Trimethylene Ether) Glycol>

The terminal allyl group amount in a poly(trimethylene ether) glycol was determined with a $^1$H-NMR apparatus ("AVANCE 400", manufactured by BRUKER).

<Molecular Weight Distribution of Polyether Polyol>

The molecular weight distribution of a polyether polyol was determined by preparing a tetrahydrofuran solution of the polyether polyol, examining the solution with an apparatus for gel permeation chromatography (GOC) [trade name "HLC-8220", manufactured by Tosoh Corp. (columns: TSKgelSuper HZM-N (three)), and drawing a calibration curve using a tetrahydrofuran calibration kit (Polymer Laboratories Ltd.)

<Molecular Weights of Polyurethane and Polyurethane-Urea>

Molecular weights of a polyurethane or polyurethane-urea obtained were determined by preparing a dimethylacetamide solution of the polyurethane or polyurethane-urea and examining the solution with a GPC apparatus [trade name "HLC-8120", manufactured by Tosoh Corp. (columns: Tskgel H3000/H4000/H6000)] to determine the number-average molecular weight (Mn) and weight-average molecular weight (Mw) calculated for standard polystyrene.

<Amount of Hard Segments in Polyurethane and Polyurethane-Urea>

The amount of hard segments in a polyurethane or polyurethane-urea obtained is the proportion of the weight of combined isocyanate and amine parts to the whole weight, the proportion being calculated using the following equation based on P.J. Flory, Journal of American Chemical Society, 58, 1877-1885 (1936).

$$\text{Hard segment (\%)} = [(R-1)(Mdi+Mda)/\{Mp+R{\cdot}Mdi+(R-1){\cdot}Mda+Mc{\cdot}Gc\}]\times 100$$

In the equation,
R = (number of moles of isocyanate)/[(number of moles of hydroxyl groups of polyether polyol)+(number of moles of terminal allyl groups)],
Mdi = number-average molecular weight of diisocyanate,
Mda = number-average molecular weight of diamine,
Mp = number-average molecular weight of polyether polyol,
Mc = molecular weight of terminal allyl group,
Gc = equivalent amount of terminal allyl groups (number of moles of terminal allyl groups per mole of polyether polyol).

<Film Properties>

Polyurethane or polyurethane-urea test pieces in a strip form were obtained which had a width of 10 mm, length of 100 mm, and thickness of about 50 $\mu$m. In accordance with JIS K6301, the test pieces were examined with a tensile tester [trade name "Tensilon UTM-III-100", manufactured by Orientec Co., Ltd.] under the conditions of a chuck-to-chuck distance of 50 mm, pulling rate of 500 mm/min, and temperature of 23°C (relative humidity, 55%) to determine the tensile strength at break, tensile elongation at break, and coefficient of stress fluctuation in 100-600%. The coefficient of stress fluctuation in 100-600% means the proportion of the stress at 600% stretching to the stress at 100% deformation.

<Retention of Elasticity and Residual Strain at 23°C>

At a temperature of 23°C (relative humidity, 55%), a film having a width of 10 mm and a thickness of about 50 μm was set so as to result in a length of 50 mm, stretched to 300% at a rate of 500 mm/min, and subsequently allowed to contract to the original length at a rate of 500 mm/min to draw a stress-strain curve. This operation was repeated five times. When the stress at 150% stretching in the S-S curve obtained in the n-th stretching operation was expressed by Hn and the stress at 150% stretching in the S-S curve obtained in the n-th contraction operation was expressed by Hrn, then Hrn/Hn was taken as retention of elasticity (%). Furthermore, the elongation at the point where the stress began to rise in the n-th stretching operation was taken as residual strain.

<Retention of Elasticity and Residual Strain at - 10°C>

At a temperature of -10°C (relative humidity was not measured), a film having a width of 10 mm and a thickness of about 50 μm was set so as to result in a length of 50 mm, stretched to 300% at a rate of 500 mm/min, and subsequently allowed to contract to the original length at a rate of 500 mm/min to draw a stress-strain curve. This operation was repeated twice. When the stress at 150% stretching in the S-S curve obtained in the n-st or n-nd stretching operation was expressed by Hn and the stress at 150% stretching in the S-S curve obtained in the n-st or n-nd contraction operation was expressed by Hrn, then Hrn/Hn was taken as retention of elasticity. Furthermore, the elongation at the point where the stress began to rise in the n-st or n-nd stretching operation was taken as residual strain.

<Retention of Elasticity and Residual Strain at 100°C>

At a temperature of 100°C (relative humidity was not measured), a film having a width of 10 mm and a thickness of about 50 μm was set so as to result in a length of 50 mm, stretched to 300% at a rate of 500 mm/min, and subsequently allowed to contract to the original length at a rate of 500 mm/min to draw a stress-strain curve. This operation was repeated twice. When the stress at 150% stretching in the S-S curve obtained in the n-st or n-nd stretching operation was expressed by Hn and the stress at 150% stretching in the S-S curve obtained in the n-st or n-nd contraction operation was expressed by Hrn, then Hrn/Hn was taken as retention of elasticity. Furthermore, the elongation at the point where the stress began to rise in the n-st or n-nd stretching operation was taken as residual strain.

<Moisture Permeability>

In accordance with JIS Z-0208, the moisture permeability of a film was determined through weight measurement using a moisture permeability cup under the conditions of 40°C and 90% RH.

REFERENCE EXAMPLE 1

Production of Poly(Trimethylene Ether) Glycol

<Dehydration condensation reaction of 1,3-Propanediol>

Into a 1,000-mL four-necked flask equipped with a distillation tube, nitrogen introduction tube, mercury thermometer, and stirrer was introduced 500 g of 1,3-propanediol while supplying nitrogen at 1 NL/min. Thereinto was supplied 0.348 g of sodium carbonate. Thereafter, 6.78 g of 95% by weight concentrated sulfuric acid was gradually added thereto with stirring. This flask was heated in an oil bath to elevate the temperature of the liquid in the flask to 163°C over about 1.5 hours. The time at which the temperature of the liquid in the flask reached 163°C was taken as a reaction initiation point. The reaction mixture was then reacted for 18 hours while keeping the liquid temperature at 163°C. The water which had been generated by the reaction was caused to accompany the nitrogen and distilled off.
The liquid reaction mixture was allowed to cool to room temperature and then transferred to a 2-L four-necked flask containing 500 g of desalted water. The contents were refluxed for 8 hours to hydrolyze the sulfuric ester. Thereto was added 5.84 g of calcium hydroxide. The resultant mixture was stirred at 70°C for 2 hours to conduct neutralization, and nitrogen bubbling was thereafter conducted with heating with an oil bath to distill off most of the water. Subsequently, toluene was added to conduct azeotropic dehydration. A solid matter was taken out by pressure filtration, and the toluene was then distilled off with an evaporator. Furthermore, the polyether was dried at 120°C for 2 hours at a reduced pressure of 5 mmHg to obtain a poly(trimethylene ether) glycol (A). This polymer had a number-average molecular weight and a proportion of terminal allyl groups, both determined by NMR spectroscopy, of 1,995 and 1.40%, respectively.

<Unsaturated-Terminal-Group Diminution Reaction>

Into a four-necked flask were introduced 2.21 g (0.5% by weight on dry basis based on the poly(trimethylene ether) glycol) of an activated carbon having 5% palladium supported thereon [manufactured by N.E. Chemcat Corp.; E Type; water-containing product (water content, 54.76% by weight); Lot No. 217-0404140], 30.0 g of water, 30.0 g of isopropyl alcohol, and 200.0 g of the poly(trimethylene ether) glycol. The contents were heated with refluxing. In this operation, the temperature of the contents was about 90°C. After the heating with refluxing was conducted for 4 hours, the reaction mixture was cooled to room temperature and 200 cc of methanol was added thereto to dilute the organic layer. Thereafter, the catalyst was taken out by pressure filtration with a 0.2-$\mu$m PTFE membrane filter. Most of the water and alcohol were distilled off the filtrate with an evaporator, and the residue was dried at 120°C and 5 mmHg for 1 hour. The proportion of terminal allyl groups in the poly(trimethylene ether) glycol obtained was below a detection limit for NMR spectroscopy.

EXAMPLE 1

Into a 3-L separable flask was introduced 2,200.84 g of a poly(trimethylene ether) glycol (number-average molecular weight calculated from hydroxyl value, 2,000; proportion of terminal allyl groups, 1.4%) containing 5 ppm phosphoric acid and heated beforehand at 40°C. Subsequently, 499.16 g of diphenylmethane diisocyanate (MDI) heated at 40°C was added thereto (NCO/OH ratio = 1.80). This flask was set on a 45°C oil bath, and the temperature of the oil bath was elevated to 70°C over 1 hour in a nitrogen stream with stirring with an anchor type stirring blade (150 rpm). Thereafter, the flask was held at 70°C for 3 hours. The conversion of the NCOs was ascertained through titration to have exceeded 98%. Thereafter, the resultant prepolymer was transferred to a 2-L tinplate can and held therein overnight in a 40°C thermostatic chamber.

Into a prepolymer tank were introduced 1,848 g of the prepolymer and 2,772 g of dehydrated dimethylacetamide (DMAC; manufactured by Kanto Chemical Co., Inc.). The mixture was stirred at room temperature to dissolve the prepolymer, and the resultant solution was cooled to and kept at 10°C. In an amine tank, a 3% DMAC solution of ethylenediamine (EDA)/propylenediamine (PDA)/diethylamine (DEA) = 76.5/19.1/4.4 (molar ratio) was prepared and cooled to and kept at 10°C. A casting machine (constant-delivery mixer for two liquids) was used to conduct the following experiment. Metering pumps in which the rotation speeds of the metering pump drive motors were inverter-controlled were used to feed the liquids from the respective tanks while regulating the flow ratio between these so that the amine/NCO ratio was changed in the range of 0.98-1.06, which centered at 1.02, at an interval of 0.02 and that the total flow rate was 120 g/min. With respect to each ratio, the resultant mixture was sampled when a reaction temperature had become stable. (In the case where amine/NCO = 1.00, the flow rates of the prepolymer solution and the amine solution were 96.10 g/min and 23.90 g/min, respectively.) In a power mixing unit, the mixer mixed the two liquids with high-speed stirring while cooling the jacket at 10°C to react the reactants and thereby obtain a DMAC solution of a polyurethane-urea. This solution was aged overnight in a 40°C thermostatic chamber and then examined by GPC for molecular weight and molecular weight distribution. A polyurethane-urea having a weight-average molecular weight of about 180,000 to 200,000 was selected from ones for which an amine/NCO ratio around 1.02 had been used. This solution was cast on a glass plate and dried at 60°C to obtain a film having a thickness of about 50 $\mu$m. Furthermore, an elastic fiber was obtained by the wet spinning method.

EXAMPLES 2 TO 4

Polyurethane-ureas were synthesized and formed into a film in the same manners as in Example 1. With respect to the poly(trimethylene ether) glycols containing terminal allyl groups, the molecular weights thereof can be regulated by reducing the amount of the monoamine as a chain terminator therefor, as can be seen from Table 1.

COMPARATIVE EXAMPLE 1

Into a 3-L separable flask was introduced 2,200.84 g of a poly(trimethylene ether) glycol to which 5 ppm phosphoric acid had been added and which had been heated beforehand at 40°C. Subsequently, 499.16 g of diphenylmethane diisocyanate (MDI) heated at 40°C was added thereto (NCO/OH ratio = 1.80). This flask was set on a 45°C oil bath, and the temperature of the oil bath was elevated to 70°C over 1 hour in a nitrogen stream with stirring with an anchor type stirring blade (150 rpm). Thereafter, the flask was held at 70°C for 3 hours. The conversion of the NCOs was ascertained through titration to have become 98-101%. Thereafter, the resultant prepolymer was transferred to a 2-L tinplate can and held therein overnight in a 40°C thermostatic chamber.

A liquid amine mixture composed of ethylenediamine (EDA)/propylenediamine (PDA)/diethylamine (DEA) = 76.5/19.1/4.4 (molar ratio) was introduced into a dropping funnel. This amine mixture was added to the prepolymer solution in a vessel with vigorous agitation. As a result, gelation occurred simultaneously with the addition, and a homogeneous polyurethane-urea was not obtained. It was attempted to dissolve the resultant lump in DMAC. However, it was impossible to evenly dissolve the lump.

Furthermore, a casting machine was used, as in Example 1, in an attempt to conduct a urethane-forming reaction without using DMAC as a solvent. However, a homogeneous polyurethane-urea was not obtained in this case also.

As demonstrated above, it is virtually impossible to carry out the polyurethane-urea reaction in which a highly reactive aromatic isocyanate and short-chain aliphatic diamines are used, so long as no solvent is used for dilution.

In the production of a polyurethane and a polyurethane-urea, the techniques using no solvent, such as that disclosed in JP-T-2005-535744, are utterly different from the techniques using a solvent as in the invention. Short-chain aliphatic diamines such as 1,2-ethylenediamine, 1,6-hexanediamine, and 1,2-propanediamine are mentioned as examples of useful diamine chain extenders in the description of JP-T-2005-535744. However, it can be seen that this prior art technique is impracticable.

COMPARATIVE EXAMPLE 2

A prepolymer, polyurethane-urea solution, and polyurethane-urea film were obtained in the same manners as in Example 1, except that a poly(tetramethylene ether) glycol (manufactured by Mitsubishi Chemical Corp.; number-average molecular weight calculated from hydroxyl value, 1,970) was used in place of the poly(trimethylene ether) glycol. Thereafter, various film property tests were conducted in the same manners.

[Table 1]

| | Polyether glycol | | | | Reaction conditions for polyurethane-urea and composition | | | | | | |
|---|---|---|---|---|---|---|---|---|---|---|---|
| | Kind | Number-average molecular weight | Amount of terminal allyl groups (%) | Mw/Mn | MDI/polyether glycol/diamines/ monoamine (molar ratio) | Composition of diamines (molar ratio) | Monofunctional component (mol%) | Content of hard segment (wt%) | Weight-average molecular weight in solution | Mw/Mn |
| Example 1 | poly-(trimethylene ether) glycol | 2000 | 1.4 | 2.14 | 180/100/78.1/3.6 | EDA/PDA=4/1 | 5.0 | 9.8 | 177840 | 2.24 |
| Example 2 | | 1980 | 0 | 2.14 | 180/100/76.5/5.1 | EDA/PDA=4/1 | 5.0 | 10.1 | 208950 | 2.08 |
| Example 3 | | 3420 | 3.4 | 2.39 | 180/100/80.1/1.5 | EDA/PDA=4/1 | 5.0 | 6.0 | 178990 | 2.05 |
| Example 4 | | 3420 | 3.4 | 2.39 | 230/100/129.8/2.8 | EDA/PDA=4/1 | 5.0 | 9.5 | 207450 | 2.20 |
| Comparative Example 1 | | 2000 | 1.4 | 2.14 | 180/100/78.1/3.6 | EDA/PDA=4/1 | 5.0 | 9.8 | - | - |
| Comparative Example 2 | PTMG | 1980 | 0 | 2.30 | 180/100/76.7/4.9 | EDA/PDA=4/1 | 5.0 | 10.2 | 185450 | 2.13 |

In Table 1, the proportion of terminal allyl groups is defined as [(number of moles of terminal allyl groups)/(number of moles of terminal hydroxyl groups)]×100. The component (mol%) is defined as [(terminal allyl groups of polyol)+(monoamine)]/[(hydroxyl groups of polyol)+(terminal allyl groups of polyol)+(diamines)+(monoamine)].

[Table 2]

| | 23°C | | | | | -10°C | | 100°C | | Moisture permeability (g/m²·24hr) |
|---|---|---|---|---|---|---|---|---|---|---|
| | Strength at break (MPa) | Elongation at break (%) | Coefficient of stress fluctuation in 100-600% | Hr1/H1 (%) | Hr5/H5 (%) | Hr1/H1 (%) | Residual strain (2nd) (%) | Hr1/H1 (%) | Residual strain (2nd) (%) | |
| Example 1 | 76.9 | 900 | 4.2 | 43 | 87 | 13 | 57 | 47 | 40 | 3010 |
| Example 2 | 54.0 | 916 | 3.7 | 44 | 87 | 11 | 50 | 47 | 35 | - |
| Example 3 | 40.4 | 934 | 4.9 | 58 | 92 | 0 | 160 | - | - | - |
| Example 4 | 63.7 | 980 | 4.5 | 44 | 88 | 0 | 170 | 46 | 30 | - |
| Comparative Example 2 | 57.5 | 633 | 9.9 | 31 | 66 | 0 | 123 | 48 | 40 | 2100 |

EXAMPLE 5

Into a separable flask were introduced 70 g of the prepolymer produced in Example 1 and 300 cc of dehydrated DMAC (manufactured by Kanto Chemical Co., Inc.). The contents were stirred with an anchor type stirring blade at 100 rpm and a liquid temperature of 28-30°C, and the time period required for dissolution was measured. The prepolymer was completely dissolved in 25 minutes.

COMPARATIVE EXAMPLE 3

Into a separable flask were introduced 70 g of the prepolymer produced in Comparative Example 2 and 300 cc of dehydrated DMAC (manufactured by Kanto Chemical Co., Inc.). The contents were stirred with an anchor type stirring blade at a speed of 100 rpm and a liquid temperature of 28-30°C for 50 minutes. However, the prepolymer was not completely dissolved. The contents were further stirred at a speed of 150 rpm for 25 minutes and, as a result, the whole prepolymer was finally dissolved (total time period, 75 minutes).

EXAMPLE 6

Into a 3-L separable flask was introduced 2,435.3 g of a poly(trimethylene ether) glycol (number-average molecular weight calculated from hydroxyl value, 3,420; proportion of terminal allyl groups, 3.17%) containing 5 ppm phosphoric acid and heated beforehand at 40°C. Subsequently, 411.9 g of diphenylmethane diisocyanate (MDI) heated at 40°C was added thereto (NCO/OH = 2.30). This flask was set on a 45°C oil bath, and the temperature of the oil bath was elevated to 70°C over 1 hour in a nitrogen stream with stirring with an anchor type stirring blade (150 rpm). Thereafter, the flask was held at 70°C for 3 hours. The conversion of the NCOs was ascertained through titration to have exceeded 98%. Thereafter, the resultant prepolymer was transferred to a 3-L tinplate can and held therein overnight in a 40°C thermostatic chamber.

Into a prepolymer tank were introduced 2,242 g of the prepolymer and 3,363 g of dehydrated dimethylacetamide (DMAC; manufactured by Kanto Chemical Co., Inc.). The mixture was stirred at room temperature to dissolve the prepolymer, and the resultant solution was cooled to and kept at 10°C. In an amine tank, a 3% DMAC solution of ethylenediamine (EDA)/propylenediamine (PDA) /diethylamine (DEA) = 76.7/19.2/4.1 (molar ratio) was prepared and cooled to and kept at 10°C. A casting machine (constant-delivery mixer for two liquids) was used to conduct the following experiment. Metering pumps in which the rotation speeds of the metering pump drive motors were inverter-controlled were used to feed the liquids from the respective tanks while regulating the flow ratio between these so that the amine/NCO ratio was changed in the range of 0.98-1.06, which centered at 1.02, at an interval of 0.02 and that the total flow rate was 120 g/min. With respect to each ratio, the resultant mixture was sampled when a reaction temperature had become stable. (In the case where amine/NCO = 1.00, the flow rates of the prepolymer solution and the amine solution were 96.10 g/min and 23.90 g/min, respectively.) In a power mixing unit, the mixer mixed the two liquids with high-speed stirring while cooling the jacket at 10°C to react the reactants and thereby obtain a DMAC solution of a polyurethane-urea. This solution was aged overnight in a 40°C thermostatic chamber and then examined by GPC for molecular weight and molecular weight distribution. A polyurethane-urea having a weight-average molecular weight of about 180,000 to 200,000 was selected from ones for which an amine/NCO ratio around 1.02 had been used. This solution was cast on a glass plate and dried at 60°C to obtain a film having a thickness of about 50 μm. Furthermore, an elastic fiber was obtained by the wet spinning method.

EXAMPLES 7 TO 9

Polyurethane-ureas were synthesized and formed into a film in the same manners as in Example 6. With respect to the poly(trimethylene ether) glycols containing terminal allyl groups, the molecular weights thereof can be regulated by reducing the amount of the monoamine as a chain terminator therefor, as can be seen from Table 3.

[Table 3]

| | Poly(trimethylene ether) glycol | | | Reaction conditions for polyurethane-urea and composition | | | | | |
|---|---|---|---|---|---|---|---|---|---|
| | Number-average molecular weight | Amount of terminal allyl groups (%) | Mw/Mn | MDI/polyether glycol/diamines/ monoamine (molar ratio) | Composition of diamines (molar ratio) | Monofunctional component (mol%) | Content of hard segment (wt%) | Weight-average molecular weight in solution | Mw/Mn |
| Example 6 | 3420 | 3.17 | 2.39 | 230/100/129.8/5.6 | EDA/PDA=4/1 | 5.0 | 9.5 | 207450 | 2.20 |
| Example 7 | 2700 | 1.98 | 2.34 | 208/100/106.6/7.1 | EDA/PDA=4/1 | 5.0 | 10.0 | 197367 | 2.02 |
| Example 8 | 2000 | 1.40 | 2.14 | 180/100/78.1/7.2 | EDA/PDA=4/1 | 5.0 | 9.8 | 177840 | 2.24 |
| Example 9 | 1980 | 0 | 2.14 | 180/100/76.5/10.3 | EDA/PDA=4/1 | 5.0 | 10.1 | 208950 | 2.08 |

EP 2 246 379 B1

In Table 3, the proportion of terminal allyl groups is defined as [(number of moles of terminal allyl groups)/(number of moles of terminal hydroxyl groups)]×100. The monofunctional component (mol%) is defined as [(terminal allyl groups of polyol)+(monoamine)]/[(hydroxyl groups of polyol)+(terminal allyl groups of polyol)+(diamines)+(monoamine)].

[Table 4]

| | 23°C | | | | | | | 100°C | |
|---|---|---|---|---|---|---|---|---|---|
| | Strength at break (MPa) | Elongation at break (%) | Coefficient of stress fluctuation in 100-600% | Hr1/H1 (%) | Hr5/H5 (%) | Residual strain (2nd) (%) | Residual strain (5th) (%) | Hr1/H1 (%) | Residual strain (2nd) (%) |
| Example 6 | 63.7 | 980 | 4.5 | 44 | 88 | 16 | 22 | 46 | 30 |
| Example 7 | 60.6 | 922 | 3.9 | 46 | 88 | 20 | 26 | 49 | 31 |
| Example 8 | 76.9 | 900 | 4.2 | 43 | 87 | 23 | 30 | 47 | 40 |
| Example 9 | 54,0 | 916 | 3.7 | 44 | 87 | 20 | 28 | 47 | 35 |

EP 2 246 379 B1

EXAMPLE 10

Into a 3-L separable flask was introduced 2,472.4 g of a poly(trimethylene ether) glycol (number-average molecular weight calculated from hydroxyl value, 3,420; proportion of terminal allyl groups, 3.17%) containing 5 ppm phosphoric acid and heated beforehand at 40°C. Subsequently, 327.3 g of diphenylmethane diisocyanate (MDI) heated at 40°C was added thereto (NCO/OH = 1.80). This flask was set on a 45°C oil bath, and the temperature of the oil bath was elevated to 70°C over 1 hour in a nitrogen stream with stirring with an anchor type stirring blade (150 rpm). Thereafter, the flask was held at 70°C for 3 hours and then at 80°C for 2 hours. The conversion of the NCOs was ascertained through titration to have exceeded 98%. Thereafter, the resultant prepolymer was transferred to a 3-L tinplate can and held therein overnight in a 40°C thermostatic chamber.

Into a prepolymer tank were introduced 2,091.5 g of the prepolymer and 3,137 g of dehydrated dimethylacetamide (DMAC; manufactured by Kanto Chemical Co., Inc.). The mixture was stirred at room temperature to dissolve the prepolymer, and the resultant solution was cooled to and kept at 10°C. In an amine tank, a 3% DMAC solution of ethylenediamine (EDA)/propylenediamine (PDA)/diethylamine (DEA) = 77.0/19.3/3.7 (molar ratio) was prepared and cooled to and kept at 10°C. A casting machine (constant-delivery mixer for two liquids) was used to conduct the following experiment. Metering pumps in which the rotation speeds of the metering pump drive motors were inverter-controlled were used to feed the liquids from the respective tanks while regulating the flow ratio between these so that the amine/NCO ratio was changed in the range of 0.98-1.06, which centered at 1.02, at an interval of 0.02 and that the total flow rate was 120 g/min. With respect to each ratio, the resultant mixture was sampled when a reaction temperature had become stable. (In the case where amine/NCO = 1.00, the flow rates of the prepolymer solution and the amine solution were 96.10 g/min and 23.90 g/min, respectively.) In a power mixing unit, the mixer mixed the two liquids with high-speed stirring while cooling the jacket at 10°C to react the reactants and thereby obtain a DMAC solution of a polyurethane-urea. This solution was aged overnight in a 40°C thermostatic chamber and then examined by GPC for molecular weight and molecular weight distribution. A polyurethane-urea having a weight-average molecular weight of about 180,000 to 200,000 was selected from ones for which an amine/NCO ratio around 1.02 had been used. This solution was cast on a glass plate and dried at 60°C to obtain a film having a thickness of about 50 $\mu$m. Furthermore, an elastic fiber was obtained by the wet spinning method.

EXAMPLES 11 TO 15

Polyurethane-ureas were synthesized and formed into a film in the same manners as in Example 10. With respect to the poly(trimethylene ether) glycols containing terminal allyl groups, the molecular weights thereof can be regulated by reducing the amount of the monoamine as a chain terminator therefor, as can be seen from Table 5.

[Table 5]

| | Poly(trimethylene ether) glycol | | | Reaction conditions for polyurethane-urea and composition | | | | | | |
|---|---|---|---|---|---|---|---|---|---|---|
| | Number-average molecular weight | weight (%) (molar ratio Amount of terminal allyl groups (%) | Mw/Mn | MDI/polyether glycol/diamines/ monoamine (molar ratio) | Composition of diamines (molar ratio) | Monofunctional component (mol%) | Content of hard segment (wt%) | Weight-average molecular weight in solution | Mw/Mn |
| Example 10 | 3420 | 3.17 | 2.39 | 180/100/80.1/3.1 | EDA/PDA=4/1 | 5.0 | 6.0 | 178990 | 2.05 |
| Example 11 | 2000 | 1.40 | 2.14 | 147/100/45.4/5.1 | EDA/PDA=4/1 | 5.0 | 6.0 | 203918 | 2.04 |
| Example 12 | 2000 | 1.40 | 2.14 | 164/100/62.2/6.1 | EDA/PDA=4/1 | 5.0 | 8.0 | 197790 | 2.19 |
| Example 13 | 2000 | 1.40 | 2.14 | 180/100/78.1/7.2 | EDA/PDA=4/1 | 5.0 | 9.8 | 177840 | 2.24 |
| Example 14 | 1980 | 0 | 2.14 | 180/100/76.5/10.3 | EDA/PDA=4/1 | 5.0 | 10.1 | 208950 | 2.08 |
| Example 15 | 3420 | 3.17 | 2.39 | 230/100/129.8/5.6 | EDA/PDA=4/1 | 5.0 | 9.5 | 207450 | 2.20 |

EP 2 246 379 B1

In Table 5, the proportion of terminal allyl groups is defined as [(number of moles of terminal allyl groups)/(number of moles of terminal hydroxyl groups)]×100. The monofunctional component (mol%) is defined as [(terminal allyl groups of polyol)+(monoamine)]/[(hydroxyl groups of polyol)+(terminal allyl groups of polyol)+(diamines)+(monoamine)].

[Table 6]

| | | 23°C | | | | | | |
|---|---|---|---|---|---|---|---|---|
| | | Strength at break (MPa) | Elongation at break (%) | Coefficient of stress fluctuation in 100-600% | H2/H1 (%) | Hr1/H1 (%) | Hr5/H5 (%) | Residual strain (2nd) (%) | Residual strain (5th) (%) |
| | Example 10 | 40.4 | 934 | 4.9 | 65 | 58 | 92 | 13 | 16 |
| | Example 11 | 59.3 | 1054 | 3.5 | 60 | 53 | 91 | 15 | 21 |
| | Example 12 | 63.1 | 885 | 4.1 | 57 | 48 | 89 | 17 | 22 |
| | Example 13 | 76.9 | 900 | 4.2 | 51 | 43 | 87 | 23 | 29 |
| | Example 14 | 54.0 | 916 | 3.7 | 53 | 44 | 87 | 20 | 27 |
| | Example 15 | 63.7 | 980 | 4.5 | 52 | 44 | 88 | 16 | 22 |

As demonstrated above, excellent elastic performances can be imparted by producing a polyurethane polymer from a polyether polyol having a suitably selected molecular weight.

Compared to the known prepolymer produced from a poly(tetramethylene ether) glycol (PTMG), the prepolymers produced from a poly(trimethylene ether) glycol have a higher rate of dissolution in dimethylacetamide, which is an aprotic polar solvent, even when having been prepared using the same NCO/OH feed ratio, as demonstrated above. In producing an elastic polyurethane-urea fiber, prepolymer solutions are frequently subjected to reaction after having been cooled to 0°C-15°C because the heat of reaction between isocyanates and diamines is large. Consequently, to elevate temperature in order to increase the rate of dissolution is disadvantageous in point of time in view of the necessity of subsequent cooling. Furthermore, long-term standing at a temperature of 40°C or higher in the presence of dimethylacetamide is undesirable because side reactions including isocyanate trimer formation and crosslinking reaction occur. Therefore, the finding that to use a prepolymer produced from a polytrimethylene glycol together with an aprotic polar solvent such as, e.g., DMAC leads to an improvement in productivity has a high industrial value in industrial-scale production.

While the invention has been described in detail and with reference to specific embodiments thereof, it will be apparent to one skilled in the art that various changes and modifications can be made therein without departing from the scope thereof.

This application is based on a Japanese patent application filed on July 12, 2006 (Application No. 2006-192075), Japanese patent application filed on August 10, 2006 (Application No. 2006-218843), Japanese patent application filed on August 10, 2006 (Application No. 2006-218844), Japanese patent application filed on March 30, 2007 (Application No. 2007-092699), and Japanese patent application filed on March 30, 2007 (Application No. 2007-092700).

INDUSTRIAL APPLICABILITY

The invention provides a polyurethane and a polyurethane-urea which are extremely useful in high-performance polyurethane elastomer applications such as elastic polyurethane fibers, synthetic/artificial leathers, and TPUs.

**Claims**

1. A process for producing a polyurethane from

(a) a polyether polyol which is obtained by a dehydration condensation reaction of a polyol and contains a 1,3-propanediol unit,
(b) a polyisocyanate compound, and
(c) a chain extender, which is an aliphatic diamine, wherein the polyurethane is produced in the co-presence of an aprotic polar solvent.

2. The process for producing a polyurethane according to claim 1, wherein the polyether polyol (a) contains the 1,3-propanediol unit in an amount of 50% by mole or larger.

3. The process for producing a polyurethane according to claim 1 or 2, wherein the polyether polyol (a) has a number-average molecular weight of 2,500-4,500.

4. The process for producing a polyurethane according to any one of claims 1 to 3, wherein the polyether polyol (a) has a ratio of the weight-average molecular weight to the number-average molecular weight (Mw/Mn) of 1.5 or higher.

5. The process for producing a polyurethane according to any one of claims 1 to 4, wherein the polyisocyanate compound (b) is an aromatic polyisocyanate.

6. The process for producing a polyurethane according to any one of claims 1 to 5, wherein the .aprotic polar solvent is an amide solvent.

7. A polyurethane produced by the process for polyurethane production according to any one of claims 1 to 6.

8. A film comprising the polyurethane according to claim 7.

9. A fiber comprising the polyurethane according to claim 7.

10. A urethane prepolymer solution comprising: an isocyanate-terminated prepolymer produced from

(a) a polyether polyol which is obtained by a dehydration condensation reaction of a polyol and contains a 1,3-propanediol unit and
(b) a polyisocyanate compound; and

an aprotic polar solvent.

11. The urethane prepolymer solution according to claim 10, wherein the polyether polyol (a) contains the 1,3-propanediol unit in an amount of 50% by mole or larger.

**Patentansprüche**

1. Ein Verfahren zur Herstellung eines Polyurethans aus

(a) einem Polyetherpolyol, das durch eine Dehydratationskondensationsreaktion eines Polyols erhalten wird und das eine 1,3-Propandioleinheit enthält,
(b) einer Polyisocyanatverbindung, und
(c) einem Kettenverlängerer, der ein aliphatisches Diamin ist,

wobei das Polyurethan in der gleichzeitigen Gegenwart eines aprotischen polaren Lösungsmittels hergestellt wird.

2. Das Verfahren zur Herstellung eines Polyurethans nach Anspruch 1, wobei das Polyetherpolyol (a) die 1,3-Propandioleinheit in einer Menge von 50 Mol-% oder mehr enthält.

3. Das Verfahren zur Herstellung eines Polyurethans nach Anspruch 1 oder 2, wobei das Polyetherpolyol (a) ein Zahlenmittel des Molekulargewichts von 2.500 - 4.500 aufweist.

4. Das Verfahren zur Herstellung eines Polyurethans nach einem der Ansprüche 1 bis 3, wobei das Polyetherpolyol (a) ein Verhältnis des Gewichtsmittels des Molekulargewichts zum Zahlenmittel des Molekulargewichts (Mw/Mn) von 1,5 oder höher aufweist.

**5.** Das Verfahren zur Herstellung eines Polyurethans nach einem der Ansprüche 1 bis 4, wobei die Polyisocyanatverbindung (b) ein aromatisches Polyisocyanat ist.

**6.** Das Verfahren zur Herstellung eines Polyurethans nach einem der Ansprüche 1 bis 5, wobei das aprotische polare Lösungsmittel ein Amidlösungsmittel ist.

**7.** Ein Polyurethan, hergestellt durch das Verfahren zur Polyurethanherstellung nach einem der Ansprüche 1 bis 6.

**8.** Eine Folie, umfassend das Polyurethan nach Anspruch 7.

**9.** Eine Faser, umfassend das Polyurethan nach Anspruch 7.

**10.** Eine Urethan-Vorpolymerlösung, umfassend: ein Isocyanat-terminiertes Vorpolymer, hergestellt aus

a) einem Polyetherpolyol, das durch eine Dehydratationskondensationsreaktion eines Polyols erhalten wird und das eine 1,3-Propandioneinheit enthält und
b) einer Polyisocyanatverbindung; und

ein aprotisches polares Lösungsmittel.

**11.** Die Urethan-Vorpolymerlösung nach Anspruch 10, wobei das Polyetherpolyol (a) die 1,3-Propandioleinheit in einer Menge von 50 Mol-% oder mehr enthält.


**Revendications**

**1.** Procédé de production d'un polyuréthane à partir de

(a) un polyétherpolyol qui est obtenu par une réaction de condensation par déshydratation d'un polyol et qui contient une unité 1,3-propanediol,
(b) un composé de polyisocyanate, et
(c) un agent d'allongement de chaîne, qui est une diamine aliphatique,

dans lequel le polyuréthane est produit en co-présence d'un solvant polaire aprotique.

**2.** Procédé de production d'un polyuréthane selon la revendication 1, dans lequel le polyétherpolyol (a) contient l'unité 1,3-propanediol dans une quantité de 50 % en mole ou supérieure.

**3.** Procédé de production d'un polyuréthane selon la revendication 1 ou 2, dans lequel the polyétherpolyol (a) a un poids moléculaire moyen en nombre de 2.500 à 4.500.

**4.** Procédé de production d'un polyuréthane selon l'une quelconque des revendications 1 à 3, dans lequel le polyétherpolyol (a) a un rapport entre le poids moléculaire moyen en poids et le poids moléculaire moyen en nombre (Mw/Mn) de 1,5 ou plus.

**5.** Procédé de production d'un polyuréthane selon l'une quelconque des revendications 1 à 4, dans lequel le composé de polyisocyanate (b) est un polyisocyanate aromatique.

**6.** Procédé de production d'un polyuréthane selon l'une quelconque des revendications 1 à 5, dans lequel le solvant polaire aprotique est un solvant d'amide.

**7.** Polyuréthane produit par le procédé pour production d'un polyuréthane selon l'une quelconque des revendications 1 à 6.

**8.** Film comprenant le polyuréthane selon la revendication 7.

9. Fibre comprenant le polyuréthane selon la revendication 7.

10. Solution de prépolymère d'uréthane comprenant : un prépolymère à terminaison isocyanate produit à partir de

   (a) un polyétherpolyol qui est obtenu par une réaction de condensation par déshydratation d'un polyol et qui contient une unité 1,3-propanediol et
   (b) un composé de polyisocyanate ; et

   un solvant polaire aprotique.

11. Solution de prépolymère d'uréthane selon la revendication 10, dans lequel le polyétherpolyol (a) contient l'unité 1,3-propanediol dans une quantité de 50 % en mole ou supérieure.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005535744 T
- JP 2006192075 A
- JP 2006218843 A
- JP 2006218844 A
- JP 2007092699 A
- JP 2007092700 A

**Non-patent literature cited in the description**

- **S.D. SENEKER.** New Ultra-Low Monol Polyols with Unique High-Performance Characteristics. *Polyurethane Expo,* vol. 96, 305-313
- **CONJEEVARAM et al.** *J. Polymer Science, Polymer Chemistry Edition,* 1985, vol. 28, 429-444
- **P.J. FLORY.** *Journal of American Chemical Society,* 1936, vol. 58, 1877-1885